# EUROPÄISCHE PATENTANMELDUNG

(11) **EP 3 909 699 A1**
(43) Veröffentlichungstag der Anmeldung: **17.11.2021**
(21) Anmeldenummer: 20174189.9
(22) Anmeldetag: 12.05.2020
(51) Int. Cl.: B21D 22/14, B21D 22/16, B21D 41/04, B33Y 30/00

(54) **VERFAHREN UND VORRICHTUNG ZUM HERSTELLEN EINER DÜSE FÜR DIE ADDITIVE FERTIGUNG**

(71) Anmelder: Technische Universität München, 80333 München (DE)
(72) Erfinder: MATSCHINSKI, Alexander, 80337 München (DE); ABSTREITER, Tobias, 84435 Lengdorf (DE)
(74) Vertreter: Hoefer & Partner Patentanwälte mbB

(57) **Zusammenfassung**

Die Erfindung betrifft ein Verfahren zum Herstellen einer Düse (50) für die additive Fertigung. Das Verfahren umfasst die Schritte des Bereitstellens eines Ausgangskörpers (1) mit einem hohlen Abschnitt (10), des Bewegens des Ausgangskörpers (1) und eines Werkzeugs (3) relativ zueinander und des Pressens eines Werkzeugs (3) gegen eine Außenkontur (11) des hohlen Abschnitts (10) des Ausgangskörpers (1) während des Bewegens des Ausgangskörpers (1) und des Werkzeugs (3) relativ zueinander, und zwar derart, dass die Außenkontur (11) des hohlen Abschnitts (10) des Ausgangskörpers (1) zumindest teilweise umformend verjüngt wird. Ferner betrifft die Erfindung eine Herstellvorrichtung (250) zum Herstellen einer Düse (50) für die additive Fertigung aus einem Ausgangskörper (1) mit einem hohlen Abschnitt (10) mittels des erfindungsmäßen Verfahrens.

## Beschreibung

Die Erfindung betrifft ein Verfahren zum Herstellen einer Düse, die bei einem additiven Fertigungsverfahren bzw. 3D-Druckverfahren benutzt wird. Insbesondere betrifft die vorliegende Erfindung ein Verfahren zum Herstellen einer Düse, welche bei einem extrusionsbasierten 3D-Druckverfahren, insbesondere bei einem Filament-basierten 3D-Druckverfahren, eingesetzt werden kann.

3D-Druckverfahren sind sehr populär und finden Anwendung in vielen Bereichen. 3D-gedruckte Objekte sind sowohl in der Industrie als auch in privaten Haushalten in großen Stückzahlen vorzufinden. Insbesondere ist ein 3D-Druckverfahren bekannt, bei dem ein schmelzbares, strangförmiges Ausgangsmaterial, auch als Filament-Druckmaterial bezeichnet, aufgeschmolzen und durch eine mechanische Förderung durch eine Düse schichtweise auf eine dafür vorgesehene Bauplattform gefördert wird (Filament-basiertes/FFF 3D-Druckverfahren; "FFF" steht für "fused filament fabrication"). Dabei spielt die Beschaffenheit der Düse in Abhängigkeit der verwendeten Polymere eine tragende Rolle für die Geschwindigkeit und die Qualität der Ausdrucke.

Aus dem Stand der Technik sind Herstellungsverfahren für Düsen für die additive Fertigung bekannt, bei denen die Düsen durch Zerspanen mittels Drehens und Bohrens gefertigt werden. Gerade das Bohren für die Innenform der Düsen stellt hierbei einen zeitraubenden und qualitätsbeeinflussenden Prozessschritt dar.

Daher liegt der vorliegenden Erfindung die Aufgabe zugrunde, ein schnelles und kostengünstiges Verfahren zum Herstellen einer hochqualitativen und individualisierbaren Düse für die additive Fertigung vorzuschlagen. Ferner soll eine Vorrichtung zum Herstellen einer derartigen Düse gemäß dem vorgeschlagenen Verfahren bereitgestellt werden.

Die Lösung der Aufgabe erfolgt durch ein Verfahren zum Herstellen einer Düse für die additive Fertigung mit der Merkmalskombination des unabhängigen Anspruchs 1. Die Unteransprüche haben vorteilhafte Weiterbildungen und Ausgestaltungen zum Inhalt.

Das Verfahren zum Herstellen einer Düse für die additive Fertigung umfasst die Schritte des Bereitstellens eines Ausgangskörpers mit einem hohlen Abschnitt, des Bewegens des Ausgangskörpers und eines Werkzeugs relativ zueinander und des Pressens des Werkzeugs gegen eine Außenkontur des hohlen Abschnitts des Ausgangskörpers während des Bewegens des Ausgangskörpers und des Werkzeugs relativ zueinander, und zwar derart, dass die Außenkontur des hohlen Abschnitts des Ausgangskörpers zumindest teilweise umformend verjüngt wird.

Mit anderen Worten umfasst das Verfahren zum Herstellen einer Düse für die additive Fertigung die Schritte des Bereitstellens eines Ausgangskörpers mit einem hohlen Abschnitt, des Bewegens des Ausgangskörpers und eines Werkzeugs relativ zueinander und des Umformens einer Außenkontur des hohlen Abschnitts des Ausgangskörpers durch Pressen des Werkzeugs gegen die Außenkontur des hohlen Abschnitts des Ausgangskörpers während des Bewegens des Ausgangskörpers und des Werkzeugs relativ zueinander, und zwar derart, dass der die Außenkontur des hohlen Abschnitts des Ausgangskörpers zumindest teilweise verjüngt wird.

Das Bewegen des Ausgangskörpers und des Werkzeugs relativ zueinander umfasst insbesondere ein derartiges Bewegen des Ausgangskörpers und des Werkzeugs relativ zueinander, dass durch das Pressen des Werkzeugs gegen die Außenkontur des hohlen Abschnitts des Ausgangskörpers Reibung zwischen der Außenkontur des hohlen Abschnitts und dem Werkzeug erzeugt wird.

Nach einer bevorzugten Ausführungsform der Erfindung kann das Bewegen des Ausgangskörpers und des Werkzeugs relativ zueinander durch ein Rotieren des Ausgangskörpers um eine Rotationsachse, insbesondere bei nicht rotierendem Werkzeug, realisiert werden.

Nach einer weiteren bevorzugten Ausführungsform kann das Bewegen des Ausgangskörpers und des Werkzeugs relativ zueinander vorzugsweise durch ein Rotieren des Werkzeugs um den Ausgangskörper realisiert werden, wobei der Ausgangskörper insbesondere nicht rotiert wird und bevorzugt stillstehend ist. Das Rotieren des Werkzeugs um den Ausgangskörper bedeutet, dass das Werkzeug um eine Rotationsachse rotiert wird, die derart gewählt ist, dass das Werkzeug um den Ausgangskörper rotiert wird. Insbesondere ist dabei die Rotationsachse, um die das Werkzeug rotiert wird, eine Mittelachse des Ausgangskörpers. Es sei angemerkt, dass das Bewegen des Ausgangskörpers und des Werkzeugs relativ zueinander zeitabschnittsweise (nur) durch ein Rotieren des Ausgangskörpers um eine Rotationsachse und zeitabschnittsweise (nur) durch ein Rotieren des Werkzeugs um den Ausgangskörper erzielt werden kann. Mit anderen Worten können diese beiden Optionen miteinander kombiniert werden.

Zum Pressen des Werkzeugs gegen den hohlen Abschnitt des Ausgangskörpers kann/können das Werkzeug in Richtung zum Ausgangskörper und/oder der Ausgangskörper in Richtung des Werkzeugs bewegt werden.

Zum Bereitstellen des Ausgangskörpers mit einem hohlen Abschnitt kann nach einer Ausführungsform der Erfindung ein einstückiger/einteiliger Ausgangskörper benutzt werden. Alternativ können zwei oder mehrere Körper aus dem gleichen Material oder unterschiedlichen Materialien benutzt werden, die zum Bilden des Ausgangskörpers miteinander gefügt, beispielsweise ineinandergeschoben, verschraubt oder verpresst werden.

Gemäß einer bevorzugten Ausführungsform ist der komplette Ausgangskörper hohl ausgebildet. Die hohle Ausbildung kann dabei zylindrisch mit einem kreisförmigen Querschnitt ausgeführt sein. Der Querschnitt der hohlen Ausbildung kann auch jede andere beliebige Form wie eine Ovale oder ein Polygon aufweisen. Die hohle Ausformung kann auch sternförmig ausgeführt sein.

Gemäß einer weiter bevorzugten Ausführungsform ist der Ausgangskörper zumindest abschnittsweise hohl bzw. hohlzylindrisch ausgebildet. Gemäß einer besonders bevorzugten Ausführungsform ist der Ausgangskörper als Hohlzylinder ausgebildet.

"Zumindest teilweise verjüngt" bedeutet insbesondere, dass die Außenkontur des hohlen Abschnitts des Ausgangskörpers nur über eine vorbestimmte Länge, die kleiner als die gesamte Länge des hohlen Abschnitts des Ausgangskörpers ist, verjüngt wird. Es ist aber auch möglich, dass die Außenkontur des hohlen Abschnitts des Ausgangskörpers über die komplette Länge des hohlen Abschnitts verjüngt wird.

Wie oben beschrieben, werden der hohle Abschnitt des Ausgangskörpers und das Werkzeug insbesondere aneinandergepresst, während der Ausgangskörper und das Werkzeug relativ zueinander bewegt werden. Durch die Bewegung des Ausgangskörpers und des Werkzeugs relativ zueinander, insbesondere durch das Rotieren des Ausgangskörpers um eine Rotationsachse, sowie das Pressen des Werkzeugs gegen den hohlen Abschnitt des Ausgangskörpers werden die Außenkontur des hohlen Abschnitts des Ausgangskörpers und das Werkzeug gegeneinander gerieben, wodurch die Temperatur an der Kontaktstelle bzw. Reibstelle zwischen der Außenkontur des hohlen Abschnitts des Ausgangskörpers und dem Werkzeug innerhalb von kurzer Zeit stark ansteigt. Dadurch wird das Material des hohlen Abschnitts des Ausgangskörpers plastifiziert, d.h., dass das Material teigig wird, so dass die Außenkontur des hohlen Abschnitts umgeformt werden kann. Insbesondere wird durch den vorgeschlagenen Pressvorgang eine Form einer Pressfläche des Werkzeugs, über die das Werkzeug gegen die Außenkontur des hohlen Abschnitts gepresst wird, auf die Außenkontur des hohlen Abschnitts übertragen.

Insbesondere wird eine Drehzahl des Ausgangskörpers und/oder eine Presskraft, die auf die Außenkontur des hohlen Abschnitts des Ausgangskörpers mittels des Werkzeugs aufgebracht wird, derart gewählt, dass die Temperatur an der Kontaktstelle bzw. Reibstelle zwischen dem hohlen Abschnitt des Ausgangskörpers und dem Werkzeug größer als eine Plastifizierungstemperatur und insbesondere kleiner als eine Schmelztemperatur des Materials des hohlen Abschnitts des Ausgangskörpers ist.

Als Plastifizierung eines Materials wird im Rahmen der vorliegenden Erfindung insbesondere der Übergang des Materials vom festen Aggregatszustand in einen verformbaren oder fließfähigen Aggregatszustand verstanden, um die Weiterverarbeitung des Materials zu erleichtern bzw. zu ermöglichen.

In dieser Hinsicht bedeutet im Rahmen der Erfindung die Plastifizierungstemperatur eines Materials diejenige Temperatur, bei der eine Plastifizierung des Materials stattfindet.

Als Schmelztemperatur eines Materials wird die Temperatur bezeichnet, bei der das Material schmilzt, das heißt vom festen Aggregatszustand in den flüssigen Aggregatszustand übergeht.

Der Ausgangskörper weist vorzugsweise ein erstes Ende und ein zweites Ende auf. Über das erste Ende kann der Ausgangskörper in ein Einspannwerkzeug einer Werkzeugmaschine, insbesondere in ein Drehfutter einer Drehmaschine, eingespannt werden. Das zweite Ende des Ausgangskörpers weist in vorteilhafter Weise eine Öffnung auf, aus der nach dem Pressen des Werkzeugs gegen die Außenkontur des hohlen Abschnitts des Ausgangskörpers, insbesondere nach dem Durchführen aller Schritte des vorgeschlagenen Herstellungsverfahrens, ein erwünschter Auslass der fertigen Düse entsteht. Durch den Auslass kann während eines 3D-Druckverfahrens, insbesondere während eines extrusionsbasierten 3D-Druckverfahrens, bei dem die mittels des vorgeschlagenen Verfahrens hergestellte Düse zum Einsatz kommt, das Druckmaterial austreten, um die Schichtbildung eines zu druckenden Bauteils zu ermöglichen. Dies bedeutet mit anderen Worten, dass während des Herstellungsverfahrens der Düse die Öffnung auch derart bearbeitet wird, dass die bearbeitete Öffnung am Ende des Herstellungsverfahrens dem Auslass der Düse entspricht.

Nach dem Umformen des Ausgangskörpers durch das Pressen des Werkzeugs gegen die Außenkontur des hohlen Abschnitts des Ausgangskörpers ist die Außenkontur in einer Richtung vom ersten Ende zum zweiten Ende gesehen zumindest teilweise verjüngt.

Das Pressen des Werkzeugs gegen die Außenkontur des hohlen Abschnitts des Ausgangskörpers bedeutet, dass die Pressfläche des Werkzeugs die Außenkontur des hohlen Abschnitts des Ausgangskörpers kontaktiert, vorzugsweise unmittelbar kontaktiert.

Zum Verjüngen der Außenkontur des hohlen Abschnitts des Ausgangskörpers wird insbesondere eine Presskraft auf die Außenkontur des hohlen Abschnitts des Ausgangskörpers ausgeübt, die eine zur Außenkontur senkrechte, insbesondere radiale Komponente aufweist. Ferner kann die Presskraft eine zur Außenkontur des hohlen Abschnitts parallele, insbesondere axiale Komponente aufweisen.

Das Werkzeug weist bevorzugt eine Pressfläche auf, die in einem Anstellwinkel gegen die Außenkontur des hohlen Abschnitts des Ausgangskörpers gepresst wird.

Vorzugsweise entspricht der Anstellwinkel einem Winkel zwischen der Pressfläche und einer Längsachse des hohlen Abschnitts, wenn die Pressfläche des Werkzeugs eben ausgebildet ist. Wenn die Pressfläche des Werkzeugs gekrümmt ausgebildet ist, entspricht der Anstellwinkel in vorteilhafter Weise einem Winkel zwischen einer virtuellen ebenen Pressfläche, die durch einen Anfang und ein Ende der gekrümmten Pressfläche gebildet ist, und einer Längsachse des hohlen Abschnitts.

Die Pressfläche kann in einem Winkel größer als 0 Grad und kleiner als 180 Grad zu einer Längsachse des Werkzeugs ausgebildet sein.

In vorteilhafter Weise nimmt bei der Verwendung eines Werkzeugs mit ebener Pressfläche die Außenkontur des hohlen Abschnitts des Ausgangskörpers nach dessen Pressen durch das Werkzeug den Anstellwinkel des Werkzeugs an.

Das Werkzeug ist insbesondere als Umformwerkzeug zu verstehen. Das heißt, dass das Werkzeug derart ausgebildet ist, dass dieses insbesondere die durch die Reibung zwischen dem Werkzeug und der Außenkontur des hohlen Abschnitts des Ausgangskörpers erzeugte Temperatur und die Presskraft zwischen der Außenkontur des hohlen Abschnitts des Ausgangskörpers und dem Werkzeug aushalten kann, ohne mit dem Ausgangskörper verbunden/verschweißt zu werden. In vorteilhafter Weise ist eine Plastifizierungstemperatur des Materials des Werkzeugs höher als eine Plastifizierungstemperatur des Materials des hohlen Abschnitts des Ausgangskörpers.

Vorzugsweise weist der hohle Abschnitt des Ausgangskörpers, insbesondere der komplette Ausgangskörper, einen Wärmeleitkoeffizienten von 5 W/(m*K) bis 250 W/(m*K), ferner bevorzugt von 5 W/(m*K) bis 110 W/(m*K), ferner bevorzugt von 5 W/(m*K) bis 55 W/(m*K), besonders bevorzugt von 10 W/(m*K) bis 50 W/(m*K) auf. Eine niedrige Wärmeleitfähigkeit des hohlen Abschnitts des Ausgangskörpers, insbesondere des kompletten Ausgangskörpers, trägt dazu bei, dass die Temperatur an der Kontaktstelle bzw. Reibstelle zwischen dem Werkzeug und dem hohlen Abschnitt des Ausgangskörpers schnell ansteigt. Dadurch wird die Herstellungszeit für die Düse reduziert.

Insbesondere kann der hohle Abschnitt des Ausgangskörpers, insbesondere der Ausgangskörper, ganz oder teilweise aus einem Edelstahl ausgebildet sein. Messing ist auch ein Material, aus dem der hohle Abschnitt des Ausgangskörpers, insbesondere der Ausgangskörper, ganz oder teilweise ausgebildet sein kann.

Der Ausgangskörper kann in vorteilhafter Weise kontinuierlich und/oder intermittierend und/oder um einen vorbestimmten Winkel oszillierend, d.h., zwischen einem Anfangswinkel und einem Endwinkel hin und her bewegend bzw. schwingend, während des Pressens des Werkzeugs gegen den hohlen Abschnitt des Ausgangskörpers rotiert werden.

Insbesondere beträgt eine Drehzahl des Ausgangskörpers zwischen 500 rpm und 10000 rpm, bevorzugt zwischen 1000 rpm und 5000 rpm, besonders bevorzugt zwischen 2000 rpm und 3000 rpm.

Der hohle Abschnitt des Ausgangskörpers weist einen Hohlraum auf.

Der hohle Abschnitt des Ausgangskörpers, insbesondere der komplette Ausgangskörper, ist in vorteilhafter Weise rotationssymmetrisch, insbesondere hohlzylinderförmig, ausgebildet. Bei einem hohlzylinderförmigen Abschnitt des Ausgangskörpers, insbesondere bei einem hohlzylinderförmigen Ausgangskörper, ist der Hohlraum zylinderförmig ausgebildet. Dabei kann der Hohlraum einen kreiszylinderförmigen Querschnitt aufweisen. Alternativ kann der hohle Abschnitt, insbesondere der komplette Ausgangskörper, zylinderförmig mit einem ovalförmigen, polygonförmigen oder sternförmigen Hohlraum-Querschnitt ausgebildet sein.

Vorzugsweise beträgt bei einem hohlzylinderförmigen Ausgangskörper ein Verhältnis einer Länge des Ausgangskörpers zu einem Außendurchmesser des hohlen Abschnitts des Ausgangskörpers mindestens 5, bevorzugt mindestens 10, besonders bevorzugt mindestens 15.

Vorzugsweise beträgt bei einem hohlzylinderförmigen Ausgangskörper ein Verhältnis des Außendurchmessers des Ausgangskörpers im Bereich des hohlen Abschnitts zu einem Innendurchmesser des Ausgangskörpers im Bereich des hohlen Abschnitts mindestens 1,5, vorzugsweise mindestens 2.

Ein hohlzylinderförmiger Ausgangskörper mit den zuvor angegebenen Verhältnissen wird im Rahmen der Erfindung insbesondere als Kapillarrohr bezeichnet.

Zusätzlich zur Außenkontur des hohlen Abschnitts des Ausgangskörpers kann durch das Pressen des Werkzeugs gegen die Außenkontur des hohlen Abschnitts des Ausgangskörpers in vorteilhafter Weise eine Innenkontur des hohlen Abschnitts des Ausgangskörpers zumindest teilweise umformend verjüngt werden. Mit anderen Worten kann das Werkzeug während des Bewegens des Ausgangskörpers und des Werkzeugs relativ zueinander derart gegen die Außenkontur des hohlen Abschnitts gepresst werden, dass auch die Innenkontur des hohlen Abschnitts des Ausgangskörpers in verjüngender Art umgeformt wird. Dies erfolgt dadurch, dass das Material des hohlen Abschnitts des Ausgangskörpers durch die Temperaturerhöhung aufgrund der Reibung zwischen dem Werkzeug und der Außenkontur des hohlen Abschnitts derart plastifiziert wird, so dass auch die Innenkontur des hohlen Abschnitts umformend verjüngt wird.

Somit kann durch denselben Pressvorgang sowohl die Außenkontur als auch die Innenkontur des hohlen Abschnitts des Ausgangskörpers umformend verjüngt werden. Dies bietet den Vorteil eines schnelleren Herstellungsverfahrens der Düse. Ferner kann aufgrund der Plastifizierung der Innenkontur des hohlen Abschnitts des Ausgangskörpers in der Regel eine hinsichtlich der Funktion der Düse erwünschte Oberflächenqualität der Innenkontur erreicht werden, so dass eine Nachbearbeitung der Innenkontur zur Verbesserung ihrer Oberflächeneigenschaften in der Regel nicht mehr nötig ist.

"Zumindest teilweise umformend verjüngt" mit Bezug auf die Innenkontur des hohlen Abschnitts des Ausgangskörpers bedeutet insbesondere, dass die Innenkontur des hohlen Abschnitts des Ausgangskörpers nur über eine vorbestimmte Länge, die kleiner als die gesamte Länge des hohlen Abschnitts des Ausgangskörpers ist, verjüngt wird. Es ist aber auch möglich, dass die Innenkontur des hohlen Abschnitts des Ausgangskörpers über die komplette Länge des hohlen Abschnitts verjüngt wird.

Durch die Verjüngung der Außenkontur und der Innenkontur des hohlen Abschnitts des Ausgangskörpers kann eine ursprüngliche Querschnittfläche einer Öffnung des hohlen Abschnitts in vorteilhafter Weise reduziert werden.

Die zuvor beschriebene, zur Außenkontur des hohlen Abschnitts des Ausgangskörpers parallele/axiale Komponente der Presskraft kann in vorteilhafter Weise derart gewählt werden, dass eine Wandstärke sowie ein Winkel der Innenkontur des hohlen Abschnitts beeinflusst werden.

Beim beschriebenen Pressschritt des Verfahrens können auch zwei oder mehrere Werkzeuge gegen die Außenkontur des hohlen Abschnitts des Ausgangskörpers gepresst werden. Die Werkzeuge können insbesondere gleichzeitig oder separat voneinander, d.h. zeitlich versetzt, benutzt werden. Die Werkzeuge können dabei vorzugsweise eine identische Form und/oder einen identischen Anstellwinkel aufweisen. Alternativ kann die Form und/oder der Anstellwinkel der zwei oder mehrerer Werkzeuge auch variieren. Auch kann die Wirkposition der Werkzeuge in axialer Düsenrichtung betrachtet entweder an derselben oder annähernd an derselben Stelle sein oder zwischen den Werkzeugen variieren. Durch die Verwendung zwei oder mehrerer Werkzeuge kann bevorzugt die Innenform der Düse gezielter beeinflusst werden.

Es sei angemerkt, dass im Rahmen der Erfindung die "Außenkontur" insbesondere auch als "Außenumfangsfläche" und die "Innenkontur" als "Innenumfangsfläche" bezeichnet werden können.

Insbesondere kann durch das Pressen des Werkzeugs gegen die Außenkontur des hohlen Abschnitts des Ausgangskörpers ein Mittenrauwert (Ra) der Innenkontur des hohlen Abschnitts des Ausgangskörpers von 0,04 µm bis 3 µm erreicht werden.

In vorteilhafter Weise wird der Hohlraum des hohlen Abschnitts des Ausgangskörpers während des Pressens des Werkzeugs gegen die Außenkontur des hohlen Abschnitts des Ausgangskörpers freigehalten. Somit kann beim Umformen sowohl der Außenkontur als auch der Innenkontur des hohlen Abschnitts durch den beschriebenen Pressvorgang die Innenkontur des hohlen Abschnitts des Ausgangskörpers in Abhängigkeit von der Außenkontur bzw. mit der Außenkontur korrelierend umformend verjüngt werden.

Um die Form der Innenkontur des hohlen Abschnitts des Ausgangskörpers ferner zu beeinflussen, kann vorzugsweise ein Formgebungskörper mit einer vorbestimmten Form und/oder eine Anordnung von Formgebungselementen in Form von Körnern, z.B. Sandkörner oder Salzkörner, oder eines Granulats, insbesondere mit einer vorbestimmten Form, während des Pressens des Werkzeugs gegen die Außenkontur des hohlen Abschnitts des Ausgangskörpers in dem Hohlraum des Ausgangskörpers angeordnet werden. Durch das Pressen des Werkzeugs gegen die Außenkontur des hohlen Abschnitts des Ausgangkörpers kann in vorteilhafter Weise bei Benutzung eines Formgebungskörpers dessen vorbestimmte Form und/oder bei Benutzung einer Anordnung von Formgebungselementen deren vorbestimmte Form oder eine während des Pressens anzunehmende oder angenommene weitere vorbestimmte Form auf die Innenkontur des hohlen Abschnitts des Ausgangkörpers zumindest teilweise, insbesondere vollständig, übertragen werden.

Die Anordnung der Formgebungselemente kann die weitere vorbestimmte Form annehmen, da die Formgebungselemente durch das Pressen des Werkzeugs gegen die Außenkontur des hohlen Abschnitts des Ausgangskörpers aufgrund deren kornförmiger oder granulatförmiger Ausgestaltung umpositioniert werden können. Die weitere vorbestimmte Form und somit auch die Form, die die Innenkontur des hohlen Abschnitts zumindest teilweise annimmt, hängt insbesondere vom Material und/oder von der Größe der Körner oder der Partikel, aus denen das Granulat besteht, und/oder einer Presskraft des Werkzeugs ab.

Insbesondere bei der Verwendung von Formgebungselementen in Form von Körnern oder eines Granulats kann sich durch den Pressvorgang eine bestimmte Form der Innenkontur des hohlen Abschnitts bedingt durch die Gegenkraft, die die Formgebungselemente auf die Innenkontur des hohlen Abschnitts ausüben, einstellen.

Vorzugsweise können die Körner oder die Partikel des Granulats durch einen Binder zusammengehalten sein. Somit können sich die Formgebungselemente als eine Einheit bzw. ein einteiliger Formgebungskörper verhalten. Alternativ können die Körner oder die Partikel des Granulats lose im Hohlraum des hohlen Abschnitts angeordnet sein.

Vorzugsweise ist der Formgebungskörper aus einem derartigen Material ausgebildet, dass während des Umformens der Außenkontur und/oder der Innenkontur des hohlen Abschnitts des Ausgangskörpers, insbesondere während des Pressens des Werkzeugs gegen die Außenkontur des hohlen Abschnitts des Ausgangskörpers, die vorbestimmte Form des Formgebungskörpers beibehalten wird.

Dazu weist das Material des Formgebungskörpers insbesondere eine Plastifizierungstemperatur auf, die höher als eine Plastifizierungstemperatur des Materials des hohlen Abschnitts des Ausgangskörpers ist.

Entsprechend sind die Formgebungselemente vorzugsweise aus einem derartigen Material ausgebildet, dass während des Umformens der Außenkontur und/oder der Innenkontur des hohlen Abschnitts des Ausgangskörpers, insbesondere des Pressens des Werkzeugs gegen die Außenkontur des hohlen Abschnitts des Ausgangskörpers die vorbestimmte Form der Formgebungselemente beibehalten wird oder dass die anzunehmende oder angenommene weitere vorbestimmte Form beibehalten wird.

Dazu weist das Material der Formgebungselemente insbesondere eine Plastifizierungstemperatur auf, die höher als eine Plastifizierungstemperatur des Materials des hohlen Abschnitts des Ausgangskörpers ist.

In vorteilhafter Weise kann das Material des Formgebungskörpers und/oder der Formgebungselemente derart gewählt werden, dass durch Zufügen eines Mittels, insbesondere einer Flüssigkeit, und/oder Energie und/oder Kraft der Formgebungskörper aus der vorbestimmten Form und/oder die Anordnung der Formgebungselemente aus der vorbestimmten Form oder aus der weiteren vorbestimmten Form bringbar ist/sind. Die Energie kann insbesondere Schwingungs- bzw. Vibrationsenergie sein, durch die der Formgebungskörper und/oder die Anordnung der die Formgebungselemente die vorbestimmte Form oder die weitere vorbestimmte Form verliert/verlieren und somit aus dem Hohlraum einfach entfernt werden kann/können.

Besonders bevorzugt kann/können der Formgebungskörper und/oder die Formgebungselemente aus einem in einem Lösemittel, insbesondere in Wasser oder in einer wässrigen Lösung, löslichen Material, insbesondere aus einem Salz, ausgebildet sein. Ein "Salz" ist eine chemische Verbindung aus Anionen (negativ geladene Ionen) und Kationen (positiv geladene Ionen). In vorteilhafter Weise liegt die Plastifizierungstemperatur des in einem Lösemittel löslichen Materials oberhalb der Plastifizierungstemperatur des Materials des hohlen Abschnitts des Ausgangskörpers.

Beispielsweise kann Natriumchlorid (NaCI), Natriumcarbonat (Na₂CO₃) oder Kaliumchlorid (KCI) als Material für den Formgebungskörper und/oder für die Formgebungselemente benutzt werden.

Nach einer alternativen bevorzugten Ausgestaltung der Erfindung kann der Formgebungskörper insbesondere aus Metall, beispielsweise aus Wolfram, oder aus Keramik oder aus Vollhartmetall (VHM) ausgebildet sein. In diesem Fall kann der Formgebungskörper vorzugsweise durch Herausziehen aus dem hohlen Abschnitt des Ausgangskörpers entfernt werden. Hierbei kann das Entfernen des Formgebungskörpers insbesondere unter Beibehaltung seiner vorbestimmten Form erfolgen.

Nach einer weiteren alternativen Ausgestaltung der Erfindung kann der Formgebungskörper als Ultraschallsonotrode ausgebildet sein.

Vorzugsweise kann der Formgebungskörper, insbesondere vor und/oder während des Pressens und/oder nach dem Pressen des Werkzeugs gegen die Außenkontur des hohlen Abschnitts des Ausgangskörpers, um eine Längsachse des Formgebungskörpers rotiert und/oder parallel und/oder senkrecht zu einer Längsachse des Formgebungskörpers bewegt werden. Dadurch kann Reibung zwischen der Innenkontur des hohlen Abschnitts und dem Formgebungskörper entstehen, wodurch eine Wärmeeinbringung in den und eine Wärmeverteilung im hohlen Abschnitt beeinflusst werden kann.

Insbesondere kann das Rotieren und/oder das Bewegen des Formgebungskörpers oszillierend bzw. schwingend erfolgen.

Um etwaigen Veränderungen der Oberfläche der Außenkontur und/oder der Innenkontur des hohlen Abschnitts des Ausgangskörpers, insbesondere des kompletten Ausgangskörpers, vorzubeugen, wird vor und/oder während des Pressens des Werkzeugs gegen die Außenkontur des hohlen Abschnitts des Ausgangskörpers vorzugsweise von außen und/oder innen ein Gas, insbesondere ein Schutzgas, d.h. ein inertes Gas, oder ein aktives Gas, oder eine Gasmischung, insbesondere aus einem Schutzgas und einem aktiven Gas, zugeführt. Beispielsweise kann Argon, Helium oder Stickstoff oder eine Kombination davon als Schutzgas benutzt werden. Als aktives Gas kann beispielsweise Sauerstoff zum Einsatz kommen. Somit kann eine Oberflächengüte der herzustellenden Düse weiter erhöht werden.

Von "innen" bedeutet insbesondere, dass das Gas durch zumindest einen Teil des Gesamthohlraums des Ausgangskörpers, insbesondere durch den Hohlraum des hohlen Abschnitts des Ausgangskörpers, geführt wird, wobei "von außen" eine Strömung zumindest auf einen oder an einem Teil einer Gesamtaußenkontur des Ausgangskörpers, insbesondere auf den oder an der Außenkontur des hohlen Abschnitts des Ausgangskörpers, bedeutet.

Mit anderen Worten kann das Pressen des Werkzeugs gegen die Außenkontur des Ausgangskörpers vorzugsweise in einer Gasatmosphäre, insbesondere in einer Schutzgasatmosphäre und/oder in einer aktiven Gasatmosphäre, durchgeführt werden. Dabei wird die Gasatmosphäre vorzugsweise vor dem Pressen des Werkzeugs gegen die Außenkontur des hohlen Abschnitts gebildet.

Bevorzugt wird die Gasatmosphäre durch ein Gas unter Druck gebildet. Hierbei wird der Druck des Gases derart gewählt, dass eine Kraft auf den Formgebungskörper und/oder auf die Anordnung der Formgebungselemente und/oder auf die Innenkontur des hohlen Abschnitts des Ausgangskörpers ausgeübt wird, die gegen eine durch das Pressen des Werkzeugs gegen die Außenkontur des hohlen Abschnitts des Ausgangskörpers erzeugten Presskraft wirkt.

Nach einer bevorzugten Ausführung der Erfindung erfolgt das Pressen des Werkzeugs gegen die Außenkontur des hohlen Abschnitts des Ausgangskörpers zum Verjüngen der Außenkontur und/oder der Innenkontur des hohlen Abschnitts des Ausgangskörpers in mindestens zwei Pressschritten. Somit kann insbesondere in einem ersten Pressschritt der größte Teil des Umformens bzw. des Verjüngens der Außenkontur und/oder der Innenkontur des hohlen Abschnitts des Ausgangskörpers stattfinden. Der restliche Teil des Umformens bzw. des Verjüngens der Außenkontur und/oder der Innenkontur des hohlen Abschnitts des Ausgangskörpers kann dann in einem zweiten Pressschritt stattfinden. Dadurch kann eine bessere Homogenisierung des plastifizierten Materials erzielt werden.

Es ist insbesondere möglich, dass mindestens ein Pressschritt, insbesondere der erste Pressschritt, bei freiem Hohlraum des hohlen Abschnitts des Ausgangskörpers erfolgt. Durch diesen Pressschritt kann insbesondere eine Vordeformierung der Außenkontur des hohlen Abschnitts erreicht werden. Ferner erfolgt vorzugsweise mindestens ein Pressschritt in vorteilhafter Weise unter Anordnung eines Formgebungskörpers und/oder von Formgebungselementen im Hohlraum des hohlen Abschnitts. Somit wird die Innenkontur des hohlen Abschnitts auf deren erwünschte Form gebracht.

Nach einer vorteilhaften Ausführung des Herstellungsverfahrens wird vor und/oder nach mindestens einem Pressschritt oder zwischen zwei Pressschritten die Außenkontur des hohlen Abschnitts des Ausgangskörpers zerspant, insbesondere überdreht. Wenn das Zerspanen nach dem letzten Pressschritt stattfindet, kann dieser Schritt insbesondere als Finierschritt verstanden werden.

Bevorzugt kann vor und/oder nach mindestens einem der Pressschritte und/oder zwischen zwei Pressschritten ein Ende des Ausgangskörpers bzw. ein Ende des hohlen Abschnitts, insbesondere das zuvor beschriebene zweite Ende des Ausgangskörpers, mittels eines abtragenden Verfahrens zum Bilden einer Öffnung bearbeitet werden. Die Öffnung kann vorzugsweise kreisförmig gebildet werden.

Das Bilden der Öffnung kann vorzugsweise ein erstmaliges Herstellen einer Öffnung umfassen.

Ferner kann das Bilden der Öffnung vorzugsweise ein Freigeben und/oder Erweitern einer schon existierenden Öffnung im hohlen Abschnitt umfassen.

Insbesondere kann das Freigeben der Öffnung nach einem Pressschritt stattfinden, wenn durch das Bewegen des Ausgangskörpers und des Werkzeugs relativ zueinander und das Pressen des Werkzeugs gegen die Außenkontur des hohlen Abschnitts des Ausgangskörpers plastifiziertes Material derart ausweicht, dass die Öffnung des hohlen Abschnitts blockiert, das heißt, ganz oder teilweise verschlossen, wird. Somit wird das die Öffnung blockierende Material entfernt.

Insbesondere kann die Öffnung durch Bohren und/oder Reiben und/oder Erodieren und/oder Lasern und/oder Ätzen und/oder Polieren gebildet werden.

Das Bilden der Öffnung kann in einem Schritt oder in mehreren Schritten erfolgen.

Ein Querschnitt der zu bildenden Öffnung, insbesondere ein Durchmesser der zu bildenden Öffnung im Falle einer kreisförmigen Öffnung, kann kleiner, gleich groß oder größer sein als ein Querschnitt des Hohlraums des hohlen Abschnitts, insbesondere ein Durchmesser des Hohlraums des hohlen Abschnitts im Falle eines zylinderförmigen Hohlraums, oder als ein Querschnitt einer schon existierenden Öffnung, insbesondere ein Durchmesser einer schon existierenden kreisförmigen Öffnung. Bei einem größeren Querschnitt oder Durchmesser der zu bildenden Öffnung kann sich eine Kavität in der herzustellenden Düse ausbilden.

In einer bevorzugten Variante der Erfindung kann die Öffnung über den Pressvorgang durch Wahl geeigneter Prozessparameter gebildet werden. Bevorzugt wird/werden hierbei ein zuvor beschriebener Formgebungskörper und/oder zuvor beschriebene Formgebungselemente verwendet. Ein besonders bevorzugter Formgebungskörper weist hierzu einen stirnseitigen und/oder einen spitzen Winkel mit den zumindest annähernden, insbesondere im Wesentlichen gleichen, Maßen des späteren Auslasses.

Auch eine Kombination aus den beschriebenen Verfahrensvarianten zur Herstellung der Öffnung ist möglich.

Vorzugsweise wird ein verjüngter Bereich des hohlen Abschnitts des Ausgangskörpers mit Bezug auf eine Längsachse des Ausgangskörpers abgeschrägt, insbesondere abgefräst. Insbesondere kann das Abschrägen des verjüngten Bereichs als letzter Schritt des Verfahrens zum Herstellen der Düse für die additive Fertigung erfolgen.

Je nachdem in welcher Ebene der verjüngte Bereich abgeschrägt wird, kann eine nicht ebene Öffnung bzw. ein nicht ebener Auslass entstehen. Das heißt, dass ein erster Bereich der Öffnung bzw. des Auslasses und ein zweiter Bereich der Öffnung bzw. des Auslasses nicht in derselben Ebene liegen. Der erste Bereich kann insbesondere senkrecht zur Längsachse des Ausgangskörpers bzw. der Düse stehen, wobei der zweite Bereich schräg zur Längsachse des Ausgangskörpers bzw. der Düse stehen kann. Somit kann eine Düse mit teilweise schrägem Auslass hergestellt werden.

Es ist aber auch möglich, dass der verjüngte Bereich derart abgeschrägt wird, dass eine ebene Öffnung am hohlen Abschnitts des Ausgangskörpers bzw. ein ebener Auslass an der fertigen Düse entsteht. Dabei ist die ebene Öffnung bzw. der ebene Auslass schräg mit Bezug auf die Längsachse des Ausgangskörpers bzw. der Düse angeordnet. Somit kann eine Düse mit komplett schrägem Auslass hergestellt werden.

Das Abschrägen des verjüngten Bereichs des Ausgangskörpers ist besonders vorteilhaft, wenn die Düse bei einem Druckvorgang rotiert wird, da somit bei einer Rotation der Düse bei einem Druckvorgang das Druckmaterial großflächiger verteilt wird.

Zudem bietet das Abschrägen des verjüngten Bereichs des Ausgangskörpers den Vorteil einer verbesserten Layeranbindung, d.h., einer Verbindung der abgelegten Schichten vom Druckmaterial miteinander, insbesondere bei Hochleistungsanwendungen, bei denen insbesondere Polymere mit hohen Schmelzpunkten verwendet werden. Wenn diese additiv verarbeitet werden, entsteht ein großer Gradient zwischen der Austrittstemperatur des durch den Auslass der Düse extrudierten Druckmaterials und der Temperatur des bereits abgelegten Druckmaterials. Dies begründet sich dadurch, dass eine Bauraumumgebungstemperatur deutlich geringer als die Austrittstemperatur des Druckmaterials an der Düsenöffnung ist. Der Vorteil des Abschrägens des verjüngten Bereichs des hohlen Abschnitts des Ausgangskörpers hinsichtlich des beschriebenen Temperaturgradienten wird anhand der folgenden Beschreibung näher erläutert.

Beispielsweise wird PEEK (Poly-Ether-Ether-Keton), welches als Druckmaterial benutzt werden kann, bei Temperaturen von bis zu 500 °C oder höher extrudiert (Austrittstemperatur des Druckmaterials an der Düsenöffnung). Die Bauraumumgebungstemperatur kann jedoch in der Regel nur in Bereichen unter 300 °C gehalten werden. Anderenfalls würde das abgelegte Druckmaterial überhitzt bzw. durch die dauerhafte Einwirkung einer höheren Bauraumumgebungstemperatur (ein 3D-Druck dauert meist mehrere Stunden) degradiert werden.

Im Gegensatz dazu kann durch das vorgeschlagene Abschrägen des verjüngten Bereichs des hohlen Abschnitts des Ausgangskörpers eine Spitze entstehen, welche auf der Oberfläche der bereits abgelegten Druckmaterialschicht oder mit einem Abstand von bis zu 0,5 mm, bevorzugt von bis zu 0,2 mm, besonders bevorzugt von 0,1 mm bis 0,2 mm, unterhalb der Oberfläche der bereits abgelegten Druckmaterialschicht geführt werden kann. Auf diese Weise führt die heiße Spitze dem bereits abgelegten Druckmaterial durch Wärmeleitung und/oder Konvektion und/oder Wärmestrahlung zusätzliche Energie beim Ablegen der aktuellen Druckmaterialschicht zu. Besonders bevorzugt durchmischt die Düse durch Rotation derselben den obersten Teil/den oberflächlichen Bereich des bereits abgelegten Druckmaterials und vermischt diesen mit dem aktuell abgelegten Druckmaterial. Die Anbindung der Druckmaterialschichten untereinander, welche hauptsächlich temperaturgetrieben ist, wird dadurch weiter verbessert. Durch das Abschrägen des verjüngten Bereichs kann ferner bei der Benutzung von kurzfaserverstärkten Polymeren eine Z-Orientierung der Fasern mit Hinblick auf die Festigkeit des gedruckten Bauteils optimiert werden.

Eine Düse mit einem teilweise oder komplett schräg ausgebildeten Auslass kann bei einem 3D-Druckvorgang mit Bezug auf eine Bewegungs-/Verfahrrichtung der Düse vorzugsweise derart angeordnet werden, dass das 3D-Druckmaterial zumindest zu einem gewissen Anteil im Gegenlauf zur besagten Bewegungs-/Verfahrrichtung fließt. Anders ausgedrückt ist eine Richtungsposition des teilweise oder komplett schräg ausgebildeten Auslasses der Düse während des 3D-Druckvorgangs bevorzugt in Bewegungs-/Verfahrrichtung der Düse ausgerichtet. Mit anderen Worten ist eine Komponente eines Normalenvektors des komplett schrägen Auslasses oder des zweiten Bereichs des teilweise schrägen Auslasses vorzugsweise parallel zur Bewegungs-/Verfahrrichtung der Düse ausgerichtet.

Das Bilden der Öffnung kann teilweise oder vollständig nach dem Schritt des Abschrägens des verjüngten Bereichs des hohlen Abschnitts des Ausgangskörpers erfolgen.

Bevorzugt stimmt bei rotierendem Ausgangskörper die Rotationsachse des Ausgangskörpers mit einer Mittelachse des Ausgangskörpers überein. Somit kann eine symmetrische Düse, insbesondere ein symmetrischer Auslass, ausgebildet werden.

Alternativ kann die Rotationsachse des Ausgangskörpers mit Bezug auf die Mittelachse des Ausgangskörpers vorzugsweise parallel versetzt angeordnet sein und/oder zu dieser einen Winkelversatz aufweisen. Mit anderen Worten kann vorzugsweise die Rotationsachse des Ausgangskörpers mit einem Versatz von der Mittelachse des Ausgangskörpers angeordnet sein. Somit kann eine nicht symmetrische bzw. eine exzentrische Düse, insbesondere ein exzentrischer Auslass, hergestellt werden. Dadurch wird beim Rotieren der Düse während eines Druckvorgangs die effektive Querschnittsfläche des Auslasses der Düse vergrößert. Es sei angemerkt, dass im Rahmen der Erfindung die Rotationsachse des Ausgangskörpers mit Bezug auf die Mittelachse des Ausgangskörpers als parallel versetzt verstanden wird, auch wenn eine Abweichung von bis zu einem Grad (1 Grad) von der Parallelität der Rotationsachse des Ausgangskörpers zur Mittelachse des Ausgangskörpers vorliegt.

Die Mittelachse des Ausgangskörpers erstreckt sich in einer Längsrichtung des Ausgangskörpers. Die Längsrichtung ist die Richtung des größten Maßes des Ausgangskörpers.

Zudem bezieht sich die Erfindung auf eine Düse, die durch das zuvor beschriebene Verfahren hergestellt wird. Insbesondere betrifft die Erfindung eine Düse mit einem symmetrischen Auslass oder mit einem exzentrischen Auslass. Der exzentrische Auslass kann vorzugsweise planar sein. Alternativ kann der exzentrische Auslass einen ersten Bereich und einen zweiten Bereich aufweisen, wobei die beiden Bereiche in unterschiedlichen Ebenen, insbesondere in Ebenen, die nicht parallel zueinander sind, liegen. Im letzteren Fall kann der erste Bereich senkrecht zur Mittelachse der Düse stehen, wobei der zweite Bereich schräg mit Bezug auf die Mittelachse stehen kann. Dabei sind die Bereiche planar ausgebildet. Es ist allerdings auch möglich, dass mindestens einer der Bereiche konkav bzw. konvex ausgebildet ist.

Ferner betrifft die vorliegende Erfindung eine Herstellvorrichtung zum Herstellen einer Düse für die additive Fertigung aus einem Ausgangskörper mit einem hohlen Abschnitt mittels des zuvor beschriebenen Verfahrens.

Die Herstellvorrichtung umfasst dabei eine Spannvorrichtung zum Spannen des Ausgangskörpers und/oder eines Werkzeugs. Die Spannvorrichtung kann im Rahmen der Erfindung auch als Befestigungsvorrichtung bezeichnet werden.

Weiterhin umfasst die Herstellvorrichtung vorzugsweise eine Manipulationsvorrichtung zum Manipulieren eines Formgebungskörpers, welcher zumindest im hohlen Abschnitt des Ausgangskörpers anordbar ist. Dabei ist die Manipulationsvorrichtung eingerichtet, den Formgebungskörper parallel und/oder senkrecht zu einer Längsachse des Formgebungskörpers, insbesondere oszillierend, zu bewegen und/oder den Formgebungskörper um seine Längsachse, insbesondere oszillierend, zu rotieren.

Bevorzugt umfasst die Herstellvorrichtung eine Gasführungsvorrichtung. Die Gasführungsvorrichtung ist dabei eingerichtet, ein Gas in zumindest einen Teil eines Gesamthohlraums des Ausgangskörpers und/oder auf zumindest einen Teil einer Gesamtaußenkontur des Ausgangkörpers und/oder an zumindest einen Teil einer Gesamtaußenkontur des Ausgangkörpers zum Bilden einer Gasatmosphäre zu führen.

Vorzugsweise umfasst die Herstellvorrichtung eine Kraftaufbringungsvorrichtung. Die Kraftaufbringungsvorrichtung ist eingerichtet, eine Kraft auf einen zumindest in einem Hohlraum des hohlen Abschnitts des Ausgangskörpers anordbaren Formgebungskörper und/oder auf eine zumindest in einem Hohlraum des hohlen Abschnitts des Ausgangskörpers anordbare Anordnung von Formgebungselementen auszuüben. Die Kraft soll einer Presskraft entgegenwirken, die während eines Pressens eines Werkzeugs gegen eine Außenkontur des hohlen Abschnitts des Ausgangskörpers über die Außenkontur auf den Formgebungskörper und/oder die Anordnung der Formgebungselemente ausübbar ist.

Die Kraftaufbringungsvorrichtung kann bevorzugt die Manipulationsvorrichtung und/oder die Gasführungsvorrichtung umfassen.

Somit kann die Manipulationsvorrichtung vorzugsweise eingerichtet sein, eine Kraft auf den Formgebungskörper auszuüben, um der Presskraft entgegenzuwirken, die während des Pressens des Werkzeugs gegen die Außenkontur des hohlen Abschnitts des Ausgangskörpers über die Außenkontur auf den Formgebungskörper und/oder auf die Anordnung der Formgebungselemente ausübbar ist.

Als Teil der Kraftaufbringungsvorrichtung kann die Gasführungsvorrichtung vorzugsweise eingerichtet sein, eine Kraft auf einen Formgebungskörper und/oder eine Anordnung von Formgebungselementen ausüben, um der Presskraft entgegenzuwirken, die während des Pressens des Werkzeugs gegen die Außenkontur des hohlen Abschnitts des Ausgangskörpers über die Außenkontur auf den Formgebungskörper und/oder die Anordnung der Formgebungselemente ausübbar ist. Dabei ist die auf den Formgebungskörper und/oder auf die Formgebungselemente auszuübende Kraft mittels der Gasführungsvorrichtung durch den Druck des Gases bereitstellbar.

Zum Drucken wird vorzugsweise die Düse um ihre Mittelachse rotiert. Auf diese Weise kann während des Druckvorgangs sowohl eine rotationssymmetrische als auch eine nicht rotationssymmetrische bzw. exzentrische Düse benutzt werden.

Im letzteren Fall wird aufgrund der Exzentrizität der Düse eine effektive Querschnittfläche des Auslasses der Düse vergrößert, wie schon oben erwähnt.

Um denselben Effekt auch bei einer rotationssymmetrischen Düse zu erzielen, kann während des Druckverfahrens die Düse, insbesondere ein unteres Ende der Düse parallel zu zumindest einer zur Längsachse der Düse senkrechten Achse bewegt, insbesondere oszilliert, werden. Mit anderen Worten kann die Düse, insbesondere das untere Ende der Düse, orthogonal zur Längsachse der Düse bewegt, insbesondere oszilliert, werden.

Besonders bevorzugt kann die Düse, insbesondere ein unteres Ende der Düse, in einer Ebene bewegt, insbesondere oszilliert werden, welche senkrecht zur Längsachse der Düse steht.

Mit anderen Worten kann die Düse besonders bevorzugt in einer Ebene bewegt, insbesondere oszilliert, werden, welche durch eine erste Achse und eine zweite Achse gebildet ist, die jeweils senkrecht zur Längsachse der Düse stehen und insbesondere auch senkrecht zueinanderstehen. Insbesondere ist die Ebene eine Horizontalebene.

Zum Bewegen der Düse auf diese Weise ist vorzugsweise eine Bewegungsvorrichtung vorgesehen, die eingerichtet ist, die Düse parallel und/oder mit einem Winkelversatz von -10 Grad bis +10 Grad zu einer zur Längsachse der Düse senkrechten Achse oder in einer Ebene, die senkrecht zur Längsachse steht, zu bewegen.

Die Bewegungsvorrichtung kann in vorteilhafter Weise mindestens ein Bewegungselement, insbesondere zwei Bewegungselemente, aufweisen. Jedes der Bewegungselemente ist eingerichtet, die Düse parallel und/oder mit einem Winkelversatz von -10 bis +10 Grad zu einer zur Längsachse der Düse senkrechten Achse zu bewegen.

Besonders bevorzugt umfasst die Bewegungsvorrichtung vier um 90 Grad versetzte Bewegungselemente, bevorzugt Elektromagnete. So können bevorzugt durch entsprechende Ansteuerungen der Bewegungselemente die zuvor beschriebenen Bewegungen mit einer höheren Präzision und/oder einer höheren Dynamik durchgeführt werden.

Vorzugsweise ist das mindestens eine Bewegungselement ein Magnet, insbesondere ein Elektromagnet. Um eine Bewegung der Düse in der Ebene zu erzielen, sind bevorzugt mindestens zwei Magnete, insbesondere mindestens zwei Elektromagnete, vorgesehen. Dabei ist nach einer bevorzugten Ausführungsform die Düse zumindest teilweise aus einem Material mit magnetischen Eigenschaften, insbesondere Metall, beispielsweise als Hybriddüse, hergestellt sein. Gemäß einer alternativen Ausführungsform kann die Düse durch bevorzugt nachträgliches Fügen mit einem Körper aus einem Material mit magnetischen Eigenschaften hergestellt sein.

Gleichzeitig oder alternativ dazu kann die Düse durch die Verwendung eines geeigneten Materials und/oder durch bevorzugt nachträgliches Fügen mit mindestens einem zusätzlichen Düsenkörper aus mindestens einem geeigneten Material so ausgestattet werden, dass sie durch mindestens eine in der Nähe der Düse angeordnete Magnetspule induktiv beheizt werden kann.

Insbesondere sind die zwei Bewegungselemente um 90 Grad versetzt und insbesondere an einem unteren Ende der Düse angebracht. Die Düse selbst ist vorzugsweise an ihrem oberen Ende um zwei senkrecht zu einer vertikalen Achse ausgerichtete Rotationsachsen verschwenkbar gelagert, so dass die beiden Bewegungselemente jeweils insbesondere eine Stellbewegung von bis zu 3 mm, bevorzugt von bis zu 1,5 mm, am unteren Ende der Düse ausüben können. Durch Einstellung der Bewegungsstrecken der Bewegungselemente kann die Bewegung der Düse und somit die effektive Querschnittfläche deren Auslasses eingestellt werden. Im Falle von in Form von Magneten ausgebildeten Bewegungselementen kann die Bewegung der Düse und somit auch die effektive Querschnittsfläche deren Auslasses in vorteilhafter Weise durch Einstellung der Magnetkräfte eingestellt werden.

Weiter bevorzugt können die beiden Bewegungselemente individuell ansteuerbar sein. Somit können elliptische Bewegungen oder auch reine Längs- oder seitliche Bewegungen oder Kombinationen daraus erzielt werden.

Ferner ist eine Rückstellvorrichtung vorgesehen, die eingerichtet ist, die Düse in ihre ursprüngliche Position zurückzubringen. Vorzugsweise umfasst die Rückstellvorrichtung mindestens ein Rückstellelement, insbesondere zwei Rückstellelemente. Das mindestens eine Rückstellelement bzw. die zwei Rückstellelemente sind vorzugsweise als Druckfeder ausgebildet.

Das zuvor beschriebene Verfahren zum Bewegen einer rotationsymmetrischen Düse kann auch bei einer nicht rotationssymmetrischen Düse angewandt werden.

Bei einem Druckvorgang wird die Düse vorzugsweise mittels einer Erwärmungsvorrichtung, insbesondere unter Verwendung von Licht, bevorzugt mittels einer Laservorrichtung, erwärmt. Die Erwärmungsvorrichtung kann insbesondere mindestens eine Lichtquelle umfassen, die derart ausgebildet und/oder angeordnet ist, dass die von der Lichtquelle erzeugten Lichtstrahlen auf die Düse gerichtet sein. Die mindestens eine Lichtquelle kann insbesondere als Laserquelle ausgebildet sein, die eingerichtet ist, die Laserstrahlen auf die Düse zu richten.

Dazu wird die Düse bevorzugt mit einer die Lichtstrahlung, insbesondere die Laserstrahlung, gut absorbierenden Oberfläche ausgestattet. Bei einer solchen Wärmeübertragung mittels Lichtstrahlung, insbesondere Laserstrahlung, kann die Düse besonders schlank und leicht ausgeführt sein, womit höhere Oszillationsfrequenzen der Düse realisierbar sind.

Bevorzugt kann die Erwärmungsvorrichtung, insbesondere die Laser-basierte Erwärmungsvorrichtung, ferner eingerichtet sein, eine Oberfläche in unmittelbarer Nähe eines Ablagebereichs und/oder einer Ablage für das Druckmaterial, d.h. an einer Aufschmelzzone, zu erwärmen und damit die Schicht(an)bindung zu erhöhen.

Dazu wird ein Teil der Lichtenergie, insbesondere der Laserenergie, direkt auf die Stelle gerichtet, an der das aktuell abzulegende Druckmaterial auf den bereits gedruckten Teil (insbesondere auf eine bereits abgelegte Druckmaterialschicht) des zu druckenden Bauteils trifft.

Besonders bevorzugt kann die Erwärmungsvorrichtung unter Verwendung von Licht, insbesondere Laserstrahlung, eine Optikvorrichtung umfassen, durch welche die Lichtstrahlen, insbesondere die Laserstrahlen, auf die Düse und/oder auf die Aufschmelzzone fokussiert werden.

Insbesondere kann die Optikvorrichtung einen Ring umfassen, der mit der mindestens einen Lichtquelle, insbesondere Laserquelle, lichtleitend verbunden und bevorzugt konzentrisch um die Düse herum angeordnet ist. Insbesondere ist der Ring eingerichtet, die Lichtstrahlen, insbesondere die Laserstrahlen, in Umfangsrichtung der Düse zu leiten und auf die Düse und/oder die Aufschmelzzone, insbesondere in Umfangsrichtung gleichmäßig verteilt, zu fokussieren. Somit kann eine schnelle Erwärmung der Düse und/oder der Aufschmelzzone erfolgen.

Die mindestens eine Lichtquelle, insbesondere Laserquelle, ist vorzugsweise außerhalb einer Baukammer eines Druckers angeordnet. Um die Lichtstrahlen, insbesondere Laserstrahlen, in die Baukammer zu führen und somit die Düse und/oder die Aufschmelzzone zu erwärmen, ist die mindestens eine Lichtquelle, insbesondere Laserquelle, über mindestens einen Lichtwellenleiter, insbesondere eine Glasfaserleitung, mit der Optikvorrichtung verbunden.

Der Drucker, die mindestens eine Lichtquelle, insbesondere Laserquelle, die Optikvorrichtung und insbesondere auch der mindestens eine Lichtwellenleiter, insbesondere die mindestens eine Glasfaserleitung, sind Teile einer Druckvorrichtung.

Weitere Einzelheiten, Vorteile und Merkmale der vorliegenden Erfindung ergeben sich aus nachfolgender Beschreibung von Ausführungsbeispielen anhand der Zeichnung, wobei gleich bzw. funktional gleiche Bauteile jeweils mit dem gleichen Bezugszeichen bezeichnet sind. Es zeigt:
- Fig. 1: eine schematische vereinfachte Schnittansicht eines Ausgangskörpers zum Herstellen einer Düse für die additive Fertigung mittels eines Herstellungsverfahrens gemäß einem ersten Ausführungsbeispiel der vorliegenden Erfindung,
- Fig. 2: eine schematische vereinfachte Schnittansicht der Düse, die aus dem Ausgangskörper aus Figur 1 mittels des Herstellungsverfahrens gemäß dem ersten Ausführungsbeispiel der vorliegenden Erfindung hergestellt wird,
- Fig. 3: ein Flussdiagramm, welches das Herstellungsverfahren gemäß dem ersten Ausführungsbeispiel der vorliegenden Erfindung zum Herstellen der Düse aus Figur 2 schematisch darstellt,
- Fig. 4: eine schematische vereinfachte Schnittansicht eines Ausgangskörpers zum Herstellen einer Düse für die additive Fertigung mittels eines Herstellungsverfahrens gemäß einem zweiten Ausführungsbeispiel der vorliegenden Erfindung,
- Fig. 5: eine schematische vereinfachte Schnittansicht der Düse, die aus dem Ausgangskörper aus Figur 4 mittels des Herstellungsverfahrens gemäß dem zweiten Ausführungsbeispiel der vorliegenden Erfindung hergestellt wird,
- Fig. 6: eine schematische vereinfachte Schnittansicht einer Düse, die mittels eines Herstellungsverfahrens gemäß einem dritten Ausführungsbeispiel der vorliegenden Erfindung hergestellt wird,
- Fig. 7: ein Flussdiagramm, welches das Herstellungsverfahren gemäß dem dritten Ausführungsbeispiel der vorliegenden Erfindung zum Herstellen der Düse aus Figur 6 schematisch darstellt,
- Fig. 8: eine schematische vereinfachte Schnittansicht eines Ausgangskörpers zum Herstellen einer Düse für die additive Fertigung mittels eines Herstellungsverfahrens gemäß einem vierten Ausführungsbeispiel der vorliegenden Erfindung,
- Fig. 9: eine schematische vereinfachte Schnittansicht einer Düse, die aus dem Ausgangskörper aus Figur 8 mittels des Herstellungsverfahrens gemäß dem vierten Ausführungsbeispiel der vorliegenden Erfindung hergestellt wird,
- Fig. 10: ein Flussdiagramm, welches das Herstellungsverfahren gemäß dem vierten Ausführungsbeispiel der vorliegenden Erfindung zum Herstellen der Düse aus Figur 9 schematisch darstellt,
- Fig. 11: eine schematische vereinfachte Schnittansicht eines Ausgangskörpers zum Herstellen einer Düse für die additive Fertigung mittels eines Herstellungsverfahrens gemäß einem fünften Ausführungsbeispiel der vorliegenden Erfindung,
- Fig. 12: eine schematische vereinfachte Schnittansicht einer Düse, die aus dem Ausgangskörper aus Figur 11 mittels des Herstellungsverfahrens gemäß dem fünften Ausführungsbeispiel der vorliegenden Erfindung hergestellt wird,
- Fig. 13: eine schematische vereinfachte Ansicht einer Herstellvorrichtung zum Herstellen einer Düse für die additive Fertigung aus einem Ausgangskörper mit einem hohlen Abschnitt gemäß einem sechsten Ausführungsbeispiel,
- Fig. 14: eine schematische vereinfachte Ansicht einer Herstellvorrichtung zum Herstellen einer Düse für die additive Fertigung aus einem Ausgangskörper mit einem hohlen Abschnitt gemäß einem siebten Ausführungsbeispiel,
- Fig. 15: eine vergrößerte Ansicht perspektivische Ansicht eines Werkzeugs, welches bei dem erfindungsgemäßen Herstellverfahren benutzt werden kann,
- Fig. 16: eine vereinfachte schematische Darstellung einer Druckvorrichtung,
- Fig. 17: eine schematische vereinfachte Schnittansicht einer Düse gemäß einem achten Ausführungsbeispiel der vorliegenden Erfindung,
- Fig. 18: eine schematische vereinfachte Schnittansicht einer Düse gemäß einem neunten Ausführungsbeispiel der vorliegenden Erfindung,
- Fig. 19: eine schematische vereinfachte Schnittansicht einer Düse gemäß einem zehnten Ausführungsbeispiel der vorliegenden Erfindung, und
- Fig. 20: eine schematische vereinfachte Schnittansicht einer Düse gemäß einem elften Ausführungsbeispiel der vorliegenden Erfindung.

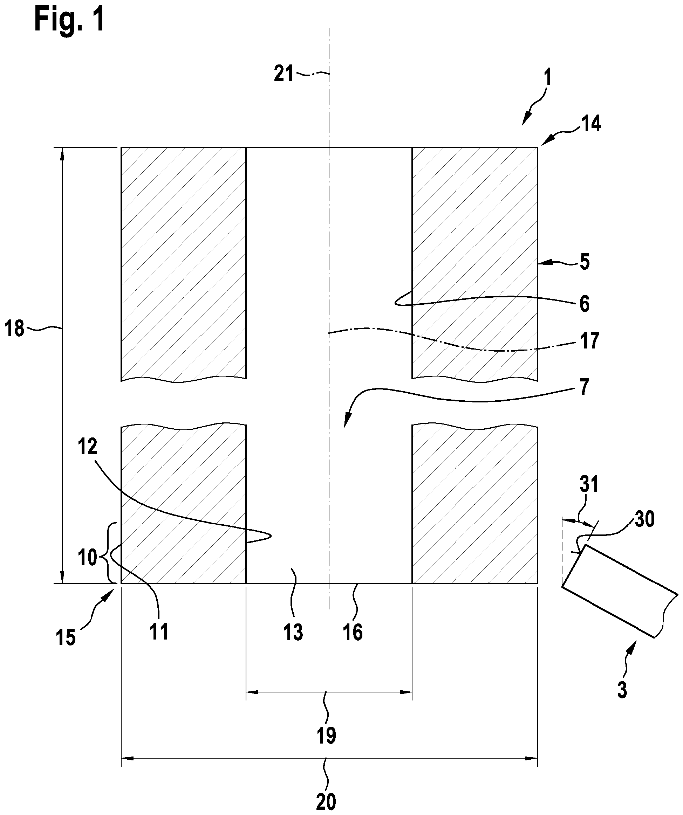

Nachfolgend wird unter Bezugnahme auf die Figuren 1 bis 3 ein erfindungsgemäßes Verfahren zum Herstellen einer Düse 50 aus einem Ausgangskörper 1 gemäß einem ersten Ausführungsbeispiel der vorliegenden Erfindung im Detail beschrieben.

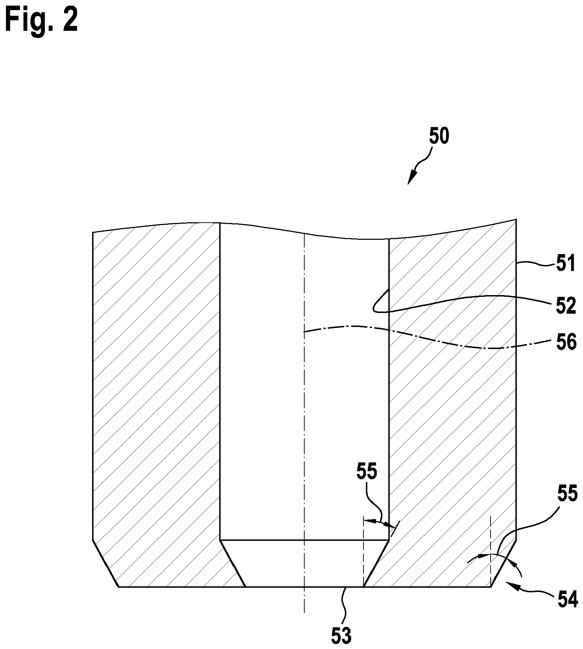

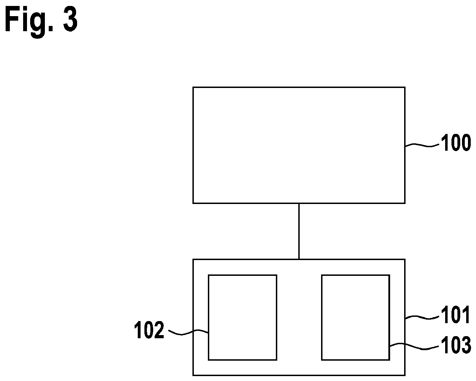

Figur 1 zeigt einen Ausgangskörper 1, aus dem die Düse 50 (nicht gezeigt) durch das Herstellungsverfahren gemäß dem ersten Ausführungsbeispiel hergestellt wird. Die fertige Düse 50 ist in Figur 2 dargestellt. Figur 3 zeigt ein Flussdiagramm des Herstellungsverfahrens gemäß dem ersten Ausführungsbeispiel.

Wie aus Figur 1 ersichtlich ist, ist der Ausgangskörper 1 rotationssymmetrisch, insbesondere hohlzylinderförmig, mit einer Mittelachse 17 ausgebildet. Der Ausgangskörper 1 ist vorzugsweise einteilig ausgebildet. Insbesondere ist der Ausgangskörper 1 aus Edelstahl ausgebildet und weist einen Wärmeleitkoeffizienten von 5 W/(m*K) bis 250 W/(m*K), bevorzugt von 5 W/(m*K) bis 110 W/(m*K), ferner bevorzugt von 5 W/(m*K) bis 55 W/(m*K), besonders bevorzugt von 10 W/(m*K) bis 50 W/(m*K) auf.

Insbesondere umfasst der Ausgangskörper 1 einen hohlen Abschnitt 10 mit einer Außenkontur 11 und einer Innenkontur 12. Die Innenkontur 12 ist einem Hohlraum 13 des hohlen Abschnitts 10 des Ausgangskörpers 1 zugewandt. Die Außenkontur 11 des hohlen Abschnitts 10 ist Teil einer Gesamtaußenkontur 5 des Ausgangskörpers 1. Entsprechend ist die Innenkontur 12 des hohlen Abschnitts 10 Teil einer Gesamtinnenkontur 6 des Ausgangskörpers 1. Ferner ist der Hohlraum 13 des hohlen Abschnitts 10 Teil eines Gesamthohlraums 7 des Ausgangskörpers 1. Aufgrund der Hohlzylinderform des Ausgangskörpers 1 ist auch der hohle Abschnitt 10 hohlzylinderförmig ausgebildet, wobei der Hohlraum 13 zylinderförmig ist.

Insbesondere ist der Ausgangskörper 1 bzw. der hohle Abschnitt 10 kreishohlzylinderförmig ausgebildet. Der Hohlraum 13 weist dabei einen kreisförmigen Querschnitt auf.

Der Ausgangskörper 1 erstreckt sich entlang der Mittelachse 17 zwischen einem ersten Ende 14 und einem zweiten Ende 15.

Über das erste Ende 14 kann der Ausgangskörper 1 an einer Werkzeugmaschine angebracht, insbesondere in ein Spannfutter einer Drehmaschine eingespannt, werden. Dadurch kann der Ausgangskörper 1 in Rotation versetzt werden.

Am zweiten Ende 15 ist eine Öffnung 16 des hohlen Abschnitts 10 ausgebildet. Die Öffnung 16 wird durch das Herstellungsverfahren derart bearbeitet, dass ein Auslass 53 der Düse 50 entsteht (Figur 2). Mit anderen Worten entspricht die durch das Herstellungsverfahren bearbeitete Öffnung 16 dem Auslass 53 der Düse 50. Durch den Auslass 53 kann während eines 3D-Druckvorgangs das 3D-Druckmaterial aus der Düse 50 austreten, um die Schichten des zu 3D-druckenden Bauteils zu bilden.

Insbesondere beträgt ein Verhältnis einer Länge 18 des Ausgangskörpers 1 zu einem Außendurchmesser 20 des Ausgangskörpers 1 im Bereich des hohlen Abschnitts 10 mindestens 5, bevorzugt mindestens 10, besonders bevorzugt 15.

Ferner beträgt ein Verhältnis des Außendurchmessers 20 des Ausgangskörpers 1 zu einem Innendurchmesser 19 des Ausgangskörpers 1 im Bereich des hohlen Abschnitts 10 bzw. Innendurchmesser 19 des hohlen Abschnitts 10 mindestens 2, vorzugsweise mindestens 3. Dabei entspricht der Innendurchmesser 19 des hohlen Abschnitts 10 einem Durchmesser der Öffnung 16.

Gemäß Figur 3 wird in einem Schritt 100 des Herstellungsverfahrens der zuvor beschriebene Ausgangskörper 1 bereitgestellt.

In einem Schritt 102 wird der Ausgangskörper 1 relativ zu einem Werkzeug 3 bewegt. Dazu wird insbesondere der Ausgangskörper 1 um eine Rotationsachse 21 rotiert. Wie sich aus Figur 1 ergibt, stimmt die Rotationsachse 21 mit der Mittelachse 17 des Ausgangskörpers 1 überein. Somit ist die durch das vorgeschlagene Herstellungsverfahren hergestellte Düse 50 rotationssymmetrisch ausgebildet. Alternativ kann auch das Werkzeug 3 um den Ausgangskörper 3, insbesondere um die Mittelachse 21 des Ausgangskörpers 3, rotiert werden.

In einem Schritt 103 wird das Werkzeug 3, welches insbesondere geschliffen ist und mindestens eine ebene Pressfläche 30 aufweist, über die Pressfläche 30 gegen die Außenkontur 11 des hohlen Abschnitts 10 des Ausgangskörpers 1 bei rotierendem Ausgangskörper 1 derart gepresst, dass die Außenkontur 11 des hohlen Abschnitts 10 des Ausgangskörpers 1 umformend verjüngt wird.

Durch das Rotieren des Ausgangskörpers 1 und das Ausüben einer Presskraft auf die Außenkontur 11 des hohlen Abschnitts 10 des Ausgangskörpers 1 mittels des Werkzeugs 3 entsteht ein Reibkontakt zwischen der Außenkontur 11 und der Pressfläche 30 des Werkzeugs 3.

Insbesondere wird eine Drehzahl des Ausgangskörpers 1 und/oder die Presskraft, die auf die Außenkontur 11 des hohlen Abschnitts 10 des Ausgangskörpers 1 aufgebracht wird, derart gewählt, dass die Temperatur an der Reibstelle zwischen dem hohlen Abschnitt 10 und dem Werkzeug 3 auf eine Temperatur höher als eine Plastifizierungstemperatur des Materials des hohlen Abschnitts 10 des Ausgangskörpers 1 gebracht wird. Somit wird das Material des hohlen Abschnitts 10 des Ausgangskörpers 1 plastifiziert, wodurch der hohle Abschnitt 10 des Ausgangskörpers 1 umgeformt werden kann.

Insbesondere wird die Pressfläche 30 des Werkzeugs 3 unter einem Anstellwinkel 31 mit Bezug auf die Außenkontur 11 des Ausgangskörpers 1 bzw. die Mittelachse 17 des Ausgangskörpers 1 gegen die Außenkontur 11 gepresst. Dadurch wird die Form der Pressfläche 30 des Werkzeugs 3 bei dem Anstellwinkel 31 auf die Außenkontur 11 des Ausgangskörpers 1 zumindest teilweise übertragen. Der Anstellwinkel 31 liegt dabei bevorzugt in einem Bereich zwischen 15° und 75°, besonders bevorzugt zwischen 25° und 65°.

Es ist Figur 1 ferner zu entnehmen, dass der Hohlraum 13 des hohlen Abschnitts 10 des Ausgangskörpers 1 während des Pressvorgangs freigehalten wird. Das Pressen des Werkzeugs 3 gegen die Außenkontur 11 wird derart durchgeführt, dass die Innenkontur 12 des hohlen Abschnitts 10 des Ausgangskörpers 1 gleich wie die Außenkontur 11 umformend verjüngt wird.

Somit weist die hergestellte Düse 50 einen verjüngten Bereich 54 auf, wie aus Figur 2 ersichtlich ist. Dabei weisen sowohl eine Düsenaußenkontur 51 als auch eine Düseninnenkontur 52 im verjüngten Bereich 54 denselben Winkel 55 auf, der dem Anstellwinkel 31 des Werkzeugs 3 entspricht.

Durch das vorgeschlagene Herstellungsverfahren sind die Düsenaußenkontur 51 und die Düseninnenkontur 52 konisch geformt. Ferner wird dadurch ein symmetrischer Auslass 53 bei der Düse 50 erreicht, der planar und senkrecht zur Mittelachse 56 der Düse 50 steht.

Weiterhin wird dadurch die Düseninnenkontur 52 in hoher Güte ausgebildet, so dass mitunter keine Nachbearbeitung der Düseninnenkontur 52 im weiteren Verlauf des Herstellungsverfahrens mehr nötig ist. Dieses bringt neben den kürzeren Fertigungszeiten vor allem den Vorteil mit sich, dass keine unbeabsichtigten Rillen durch einen weiteren, auf die Düseninnenkontur 52 einwirkenden Spanungsprozess auftreten können. So bleibt die Düseninnenkontur 52 frei von Kratzern und ungünstigen Querrillen.

Es sei angemerkt, dass die Schritte 102, 103 des Rotierens des Ausgangskörpers 1 und des Pressens des Werkzeugs 1 gegen die Außenkontur 11 des hohlen Abschnitts 10 des Ausgangskörpers 1 im Flussdiagramm von Figur 3 zusammen als Schritt 101 dargestellt sind. Der Grund dafür ist, dass zum Umformen des Ausgangskörpers 1 die Schritte des Rotierens des Ausgangskörpers 1 und des Pressens des Werkzeugs 3 gegen die Außenkontur 11 des hohlen Abschnitts 10 des Ausgangskörpers 1 gleichzeitig oder zumindest zeitlich überlappend stattfinden.

Während des Umformvorgangs des Ausgangskörpers 1 wird vorzugsweise ein Schutzgas, beispielsweise Argon, Helium oder Stickstoff, und/oder ein aktives Gas, beispielsweise Sauerstoff, durch den Hohlraum 13 an der Innenkontur 12 und/oder von außen an der Außenkontur 11 vorbeigeführt. Somit erfolgt das Umformen der Außenkontur 11 und/oder der Innenkontur 12 des hohlen Abschnitts 10 in einer Gasatmosphäre.

Es sei ferner angemerkt, dass das Pressen des Werkzeugs 3 gegen die Außenkontur 11 des hohlen Abschnitts 10 des Ausgangskörpers 1 zum Verjüngen der Außenkontur 11 und der Innenkontur 12 in mindestens zwei aufeinanderfolgenden Schritten erfolgen kann.

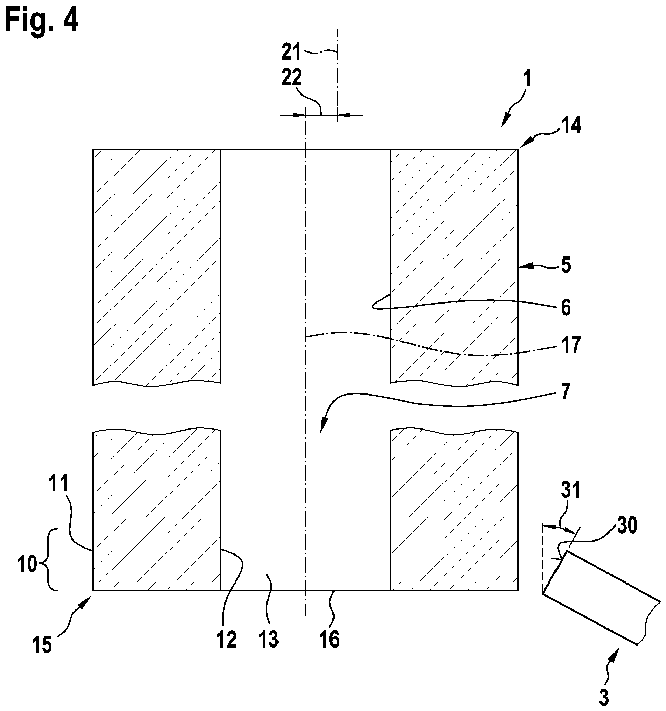

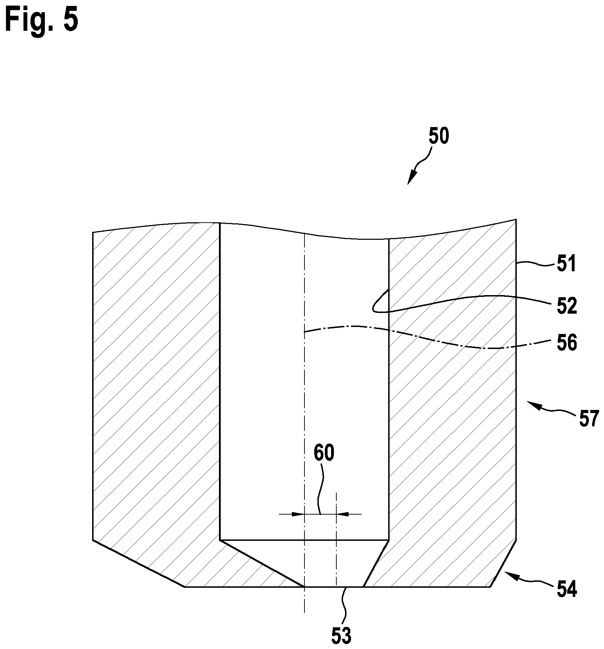

Nachfolgend wird unter Bezugnahme auf die Figuren 4 und 5 ein erfindungsgemäßes Verfahren zum Herstellen einer Düse 50 aus einem Ausgangskörper 1 gemäß einem zweiten Ausführungsbeispiel der vorliegenden Erfindung beschrieben.

Das Herstellungsverfahren gemäß dem zweiten Ausführungsbeispiel unterscheidet sich grundsätzlich vom Herstellungsverfahren gemäß dem ersten Ausführungsbeispiel dadurch, dass gemäß dem zweiten Ausführungsbeispiel der Ausgangskörper 1 um eine Rotationsachse 21 rotiert wird, die einen parallelen Versatz 22 gegenüber der Mittelachse 17 des Ausgangskörpers 1 aufweist. Mit anderen Worten ist der Ausgangskörper 1 an der Werkzeugmaschine, durch die der Ausgangskörper rotiert wird, exzentrisch angeordnet. Es ist aber auch möglich, dass die Rotationsachse 21 neben dem parallelen Versatz 22 oder alternativ dazu gegenüber der Mittelachse 17 einen Winkelversatz aufweist. Anders ausgedrückt kann der Ausgangskörper 1 an der Werkzeugmaschine schräg angeordnet werden.

In diesem Ausführungsbeispiel beträgt der Versatz 22 zwischen 0,2 mm und 0,3 mm. Dies kann allerdings je nach beabsichtigter Anwendung der Düse 50 angepasst werden.

Dadurch entsteht eine nicht rotationssymmetrische Düse 50, wie aus Figur 5 ersichtlich ist. Insbesondere wird ein exzentrischer (nicht mittiger) Auslass 53 erzeugt.

Insbesondere entspricht ein Versatz 60 des Auslasses 53 mit Bezug auf die Mittelachse 17 des Ausgangskörpers 1 dem Versatz 22 der Rotationsachse 21 gemessen von der Mittelachse 17. Es sei angemerkt, dass die Mittelachse 17 des Ausgangskörpers 1 mit der Mittelachse eines nicht verjüngten Bereichs 57 der Düse 50 übereinstimmt.

Durch die Exzentrizität des Auslasses 53 der Düse 50 wird beim Rotieren und/oder Oszillieren der Düse 50 während eines Druckvorgangs eine effektive Querschnittfläche des Auslasses 53 vergrößert. Ferner wird somit ein Wechsel zwischen größeren und kleineren Aufbauraten ermöglicht.

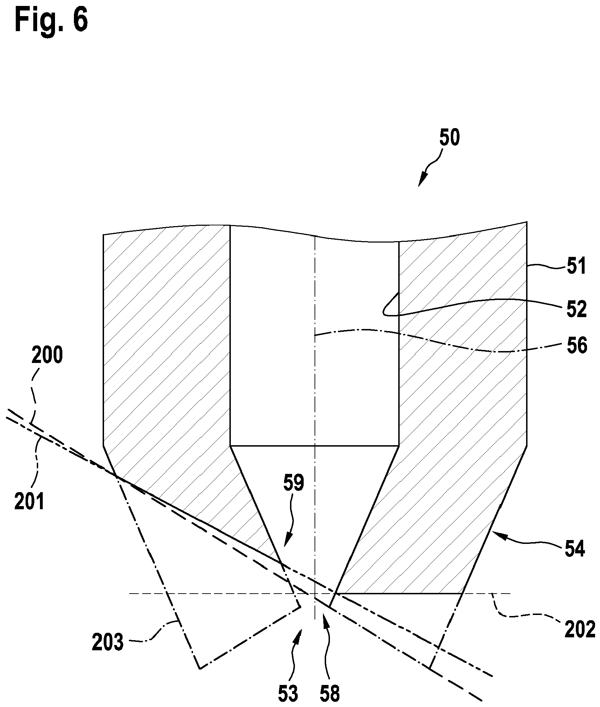

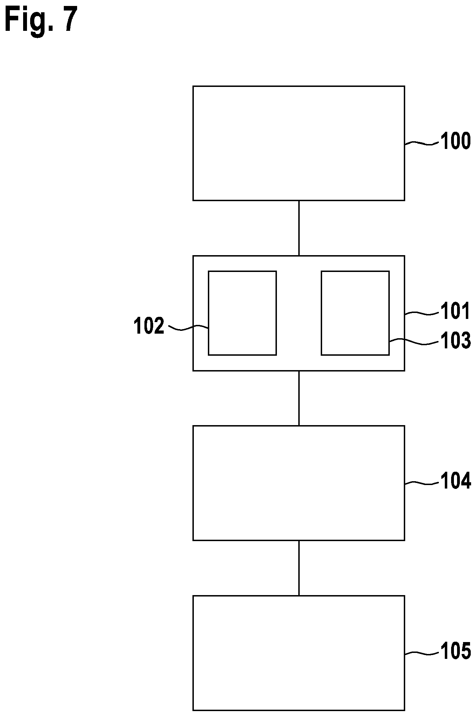

Nachfolgend wird unter Bezugnahme auf die Figuren 6 und 7 ein erfindungsgemäßes Verfahren zum Herstellen einer Düse 50 gemäß einem dritten Ausführungsbeispiel der vorliegenden Erfindung beschrieben.

Figur 6 zeigt die durch das Herstellungsverfahren gemäß dem dritten Ausführungsbeispiel hergestellte Düse 50. In Figur 7 ist das Flussdiagramm des Herstellungsverfahrens schematisch dargestellt.

Wie aus Figur 7 ersichtlich ist, werden zunächst die Schritte 100 und 101, die identisch zu den entsprechenden Schritten 100 und 101 des Verfahrens gemäß dem ersten Ausführungsbeispiel sind, durchgeführt.

Falls durch das Plastifizieren des Materials und das Pressen des Werkzeugs 3 gegen die Außenkontur 11 des hohlen Abschnitts 10 des Ausgangskörpers 1 die Öffnung 16 durch plastifiziertes Material blockiert wird, wird gemäß dem Verfahren des dritten Ausführungsbeispiels der Schritt 104 durchgeführt.

Im Schritt 104 wird die blockierte Öffnung 16 gebohrt, wodurch das darin steckende Material entfernt und somit die Öffnung 16 wieder freigegeben werden kann. Andere abtragende Verfahren können zum Freigeben der Öffnung 16 auch benutzt werden.

In einem Schritt 105 wird der Ausgangskörper 1, insbesondere die Öffnung 16 des hohlen Abschnitts 10 des Ausgangskörpers 1, mittels eines Fräsvorgangs abgeschrägt. Die Ebene 200, in der der Ausgangskörper 1 abgeschrägt wird, ist in Figur 6 durch eine gestrichelte Linie dargestellt. Weiterhin kann die Öffnung 16 des hohlen Abschnitts 10 durch eine Ebene 202 abgeschnitten werden, die senkrecht zur Mittelachse 22 des Ausgangskörpers 1 steht.

Der besseren Übersicht halber ist in Figur 6 auch der Teil 203 des Ausgangskörpers 1, der durch das Abschrägen entfernt wird, mittels Strichpunktlinien dargestellt.

Durch den zuvor beschriebenen Schritt 105 ist der Auslass 53 bei der fertigen Düse 50 nicht eben ausgebildet. Dabei weist der Auslass 53 insbesondere einen ersten Auslassbereich 58 und einen zweiten Auslassbereich 59 auf. Der erste Auslassbereich 58 steht insbesondere senkrecht zur Mittelachse 56 der Düse 50, wobei der zweite Auslassbereich 59 schräg zur Mittelachse 56 der Düse 50 steht.

Es ist aber auch möglich, dass das zweite Ende 15 des Ausgangskörpers 1 derart abgeschrägt wird, dass ein ebener Auslass 53 bei der fertigen Düse 50 entsteht. Dabei ist der ebene Auslass 53 mit Bezug auf die Mittelachse 56 der Düse 50 schräg angeordnet. Ein solcher ebener Auslass 53 entsteht beispielsweise, wenn der Ausgangskörper 1 in der Ebene 201, die in Figur 6 durch eine Strichzweipunktlinie dargestellt ist, abgeschrägt wird.

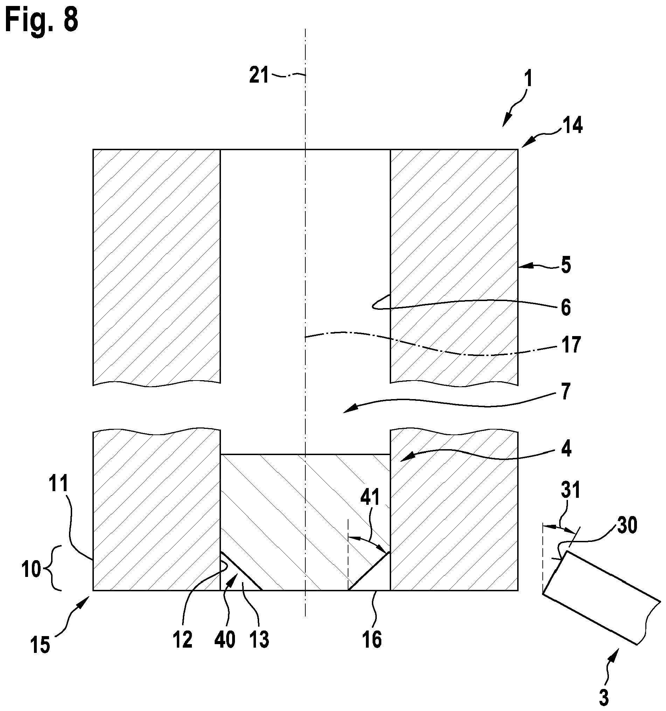

Nachfolgend wird unter Bezugnahme auf die Figuren 8 bis 10 ein erfindungsgemäßes Verfahren zum Herstellen einer Düse 50 aus einem Ausgangskörper 1 gemäß einem vierten Ausführungsbeispiel der vorliegenden Erfindung im Detail beschrieben.

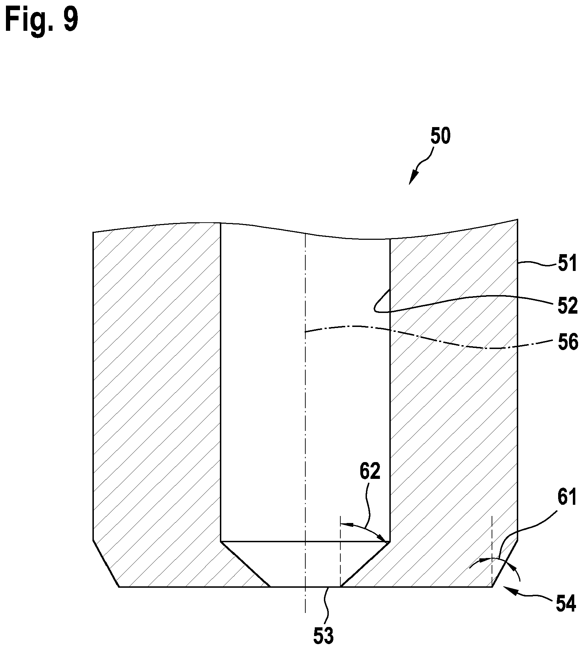

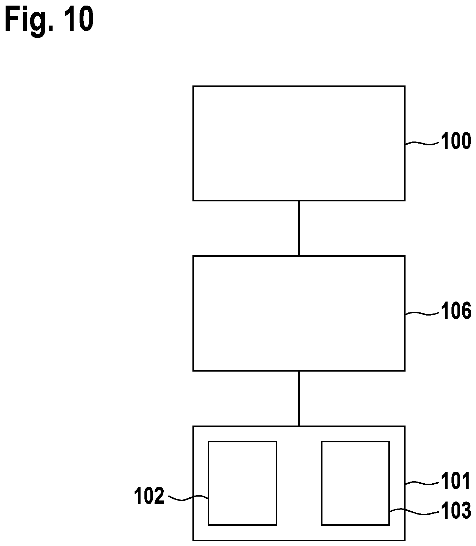

Figur 8 zeigt den Ausgangskörper 1, aus dem die Düse 50 durch das Herstellungsverfahren gemäß dem vierten Ausführungsbeispiel hergestellt wird. Die fertige Düse 50 ist in Figur 9 dargestellt. Figur 10 zeigt ein Flussdiagramm des Herstellungsverfahrens gemäß dem vierten Ausführungsbeispiel.

Gemäß Figur 10 wird vor dem Schritt 101, insbesondere vor den Schritten 102, 103 des Rotierens des Ausgangskörpers 1 und des Pressens des Werkzeugs 3 gegen die Außenkontur 11 des hohlen Abschnitts 10 des Ausgangskörpers 1, in einem Schritt 106 ein Formgebungskörper 4 in den Hohlraum 13 des hohlen Abschnitts 10 eingesetzt (Figur 8).

Durch den Formgebungskörper 4 kann beim nachfolgenden Schritt 101, insbesondere durch das Pressen des Werkzeugs 3 gegen die Außenkontur 11 des hohlen Abschnitts 10 des Ausgangkörpers 1, die Form der Innenkontur 12 angepasst werden. Insbesondere nimmt die Innenkontur 12 die Form des Formgebungskörpers 4 zumindest ansatzweise an.

In diesem Ausführungsbeispiel weist der Formgebungskörper 4 einen konischen Bereich 40 mit einem Winkel 41 auf. Andere Formen für den Formgebungskörper 4 sind natürlich auch möglich.

Figur 9 ist zu entnehmen, dass somit die Düseninnenkontur 52 im verjüngten Bereich 54 eine konische Form mit einem Winkel 62 aufweist, wobei der Winkel 62 gleich mit dem Winkel 41 des konischen Bereiches 40 des Formgebungskörpers 4 ist. Es ist allerdings auch möglich, dass der Winkel 62 unterschiedlich vom Winkel 41 ist.

Aus Figur 9 ergibt sich ferner, dass die Düsenaußenkontur 51 im verjüngten Bereich 54 eine konische Form mit einem Winkel 61 aufweist. Der Winkel 61 entspricht insbesondere dem Winkel 55 der Düsenaußenkontur 51, die durch das Herstellungsverfahren gemäß dem ersten Ausführungsbeispiel hergestellt wird.

Vorzugsweise ist der Formgebungskörper 4 aus einem Material ausgebildet, das es dem Formgebungskörper 4 ermöglicht, während des Umformens des Ausgangskörpers 1, insbesondere während des Pressens des Werkzeugs gegen den Ausgangskörper 1 bei rotierendem Ausgangskörper 1, eine vorbestimmte Form zu behalten.

Dazu weist das Material des Formgebungskörpers 4 insbesondere eine Plastifizierungstemperatur bzw. Schmelztemperatur auf, die höher als eine Plastifizierungstemperatur bzw. Schmelztemperatur des Materials des Ausgangskörpers 1 ist.

Somit kann der Formgebungskörper 4 trotz der hohen Temperatur, die an der Reibstelle zwischen der Außenkontur 11 des hohlen Abschnitts 10 des Ausgangskörpers 1 und der Pressfläche 30 des Werkzeugs 3 entsteht, unverformt bleiben.

Der Formgebungskörper 4 kann beispielsweise aus Metall, insbesondere aus Wolfram, ausgebildet sein. Alternativ kann der Formgebungskörper 4 aus Keramik hergestellt sein.

Es ist alternativ möglich, dass das Material des Formgebungskörpers 4 derart gewählt wird, dass der Formgebungskörper 4 durch Zufügen eines Mittels, insbesondere einer Flüssigkeit, aus seiner vorbestimmten Form bringbar ist. Somit kann der Formgebungskörper 4 aus dem Hohlraum 13 auf einfache Weise entfernt werden.

Bevorzugt kann der Formgebungskörper 4 aus einem in Wasser oder in einer wässrigen Lösung löslichen Material, insbesondere aus einem Salz, ausgebildet sein. Beispielsweise kann dazu Natriumchlorid (NaCl) oder Kaliumchlorid (KCl) benutzt werden. Durch das Zuführen von Wasser oder einer wässrigen Lösung kann am Ende des Herstellungsverfahrens der Formgebungskörper 4 aufgelöst werden.

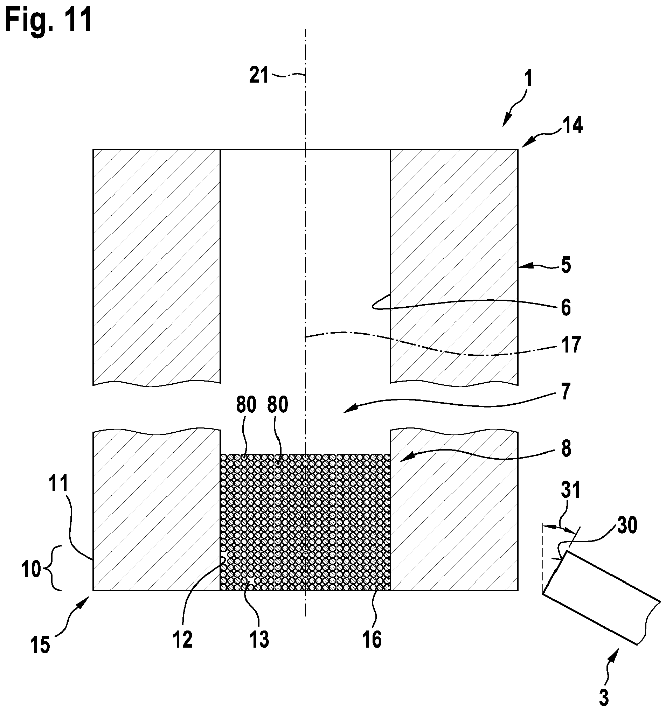

Figur 11 zeigt den Ausgangskörper 1, aus dem eine Düse 50 durch das Herstellungsverfahren gemäß einem fünften Ausführungsbeispiel hergestellt wird.

In diesem Ausführungsbeispiel wird zum Erreichen der Form der Innenkontur 12 des hohlen Abschnitts 10 statt des Formgebungskörpers 4 beim vierten Ausführungsbeispiel eine Anordnung 8 von Formgebungselementen 80 in Form eines Granulats benutzt.

Wie sich aus Figur 11 ergibt, werden die Formgebungselemente 80 in den Hohlraum 13 des hohlen Abschnitts 10 und in einen weiteren Teil des Gesamthohlraums 7 eingebracht, der unmittelbar an den Hohlraum 13 angrenzt.

Das Granulat ist vorzugsweise durch einen Binder zusammengehalten, so dass sich die Anordnung 8 der Formgebungselemente 80 als eine Einheit bzw. eine Art Formgebungskörper verhält. Alternativ kann das Granulat lose im Hohlraum 13 des hohlen Abschnitts 10 und im weiteren Teil des Gesamthohlraums 7 angeordnet sein.

Die Anordnung 8 der Formgebungselemente 80 weist im Hohlraum 13 des hohlen Abschnitts 10 und im weiteren Teil des Gesamthohlraums 7 eine vorbestimmte Form auf. Die vorbestimmte Form der Anordnung 8 ist Figur 11 zu entnehmen. Insbesondere ist die Anordnung 8 zylinderförmig ausgebildet.

Die Formgebungselemente 80 sind in diesem Ausführungsbeispiel vorzugsweise so ausgebildet, dass während des Pressens des Werkzeugs 3 gegen die Außenkontur 11 des hohlen Abschnitts 10 des Ausgangskörpers 1 die Formgebungselemente 80 aufgrund deren granulatförmiger Natur innerhalb der Anordnung 8 zu einem gewissen Grad umpositioniert werden können. Somit kann die Anordnung 8 der Formgebungselemente 80 eine weitere vorbestimmte Form annehmen, die insbesondere während des Pressvorgangs beibehalten wird.

Um trotz der hohen Temperatur, die sich aufgrund der Reibung zwischen dem hohlen Abschnitt 10 und dem Werkzeug 3 im hohlen Abschnitt 10 entwickelt, die weitere vorbestimmte Form der Anordnung 8 beizubehalten, weist das Material der Formgebungselemente 80 eine Plastifizierungstemperatur bzw. Schmelztemperatur auf, die höher als eine Plastifizierungstemperatur bzw. Schmelztemperatur des Materials des hohlen Abschnitts 10 des Ausgangskörpers 1 ist.

Somit kann durch das Pressen des Werkzeugs 3 gegen die Außenkontur 11 des hohlen Abschnitts 10 des Ausgangkörpers 1 die weitere vorbestimmte Form der Anordnung 8 der Formgebungselemente 80 auf die Innenkontur 12 des hohlen Abschnitts 10 zumindest teilweise, insbesondere vollständig, übertragen werden.

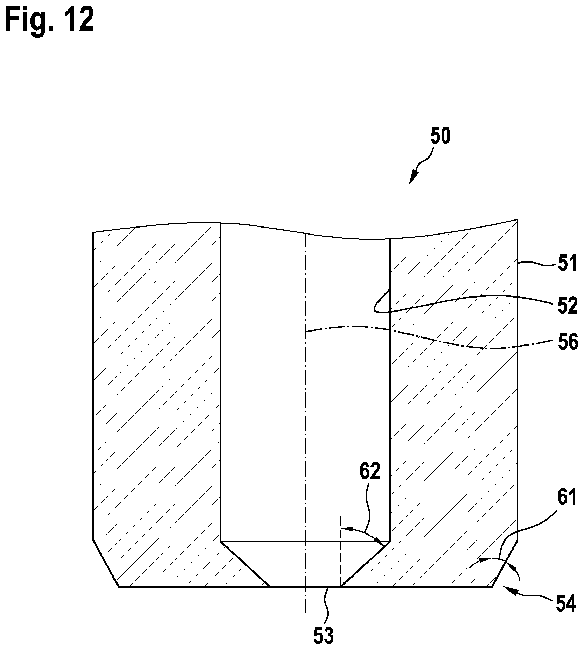

Die weitere vorbestimmte Form ist in diesem Ausführungsbeispiel ein Konus. Das heißt, dass durch das Pressen des Werkzeugs 3 gegen die Außenkontur 11 des hohlen Abschnitts 10 die Formgebungselemente 80 derart umpositioniert werden, dass die Anordnung 8 die weitere vorbestimmte Form eines Konus annimmt. Dies wird ersichtlich, wenn man Figur 12, die die durch das Herstellverfahren gemäß dem fünften Ausführungsbeispiel hergestellte Düse 50 darstellt, betrachtet.

Figur 12 ist zu entnehmen, dass die Düseninnenkontur 52 im verjüngten Bereich 54 eine konische Form mit einem Winkel 62 aufweist. Das heißt, dass die konische weitere vorbestimmte Form der Anordnung 8 der Formgebungselemente 80 durch das Pressen des Werkzeugs 3 gegen die Außenkontur 11 des hohlen Abschnitts 10 des Ausgangskörpers 1 auf die Innenkontur 12 des hohlen Abschnitts 10 übertragen worden ist und somit zur konischen Düseninnenkontur 52 geführt hat.

Es ist allerdings möglich, dass die Anordnung 8 der Formgebungselemente 80 derart ausgebildet ist, dass die vorbestimmte Form der Anordnung 80 während des Pressvorgangs beibehalten wird. In einem solchen Fall wird die vorbestimmte Form der Anordnung 80 auf die Innenkontur 12 des hohlen Abschnitts 10 zumindest teilweise, insbesondere vollständig, übertragen werden.

Aus Figur 12 ergibt sich ferner, dass die Düsenaußenkontur 51 im verjüngten Bereich 54 eine konische Form mit einem Winkel 61 aufweist. Der Winkel 61 entspricht dabei dem Anstellwinkel 31 des Werkzeugs 3.

Wenn das Umformen der Innenkontur 12 und gegebenenfalls auch der Außenkontur 11 des hohlen Abschnitts 10 abgeschlossen ist, kann die Anordnung 8 entfernt werden.

Um dies zu erleichtern, sind die Formgebungselemente 80 vorzugsweise aus einem in einem Lösemittel, insbesondere in Wasser oder in einer wässrigen Lösung, löslichen Material, insbesondere aus einem Salz, ausgebildet. Beispielsweise können Salzkörner als Formgebungselemente 80 benutzt werden.

Somit kann die Anordnung 8 der Formgebungselemente 80 durch Zufügen einer Flüssigkeit bzw. eines geeigneten Lösemittels, aus deren weiterer vorbestimmten Form gebracht und somit aus dem Hohlraum 13 und dem weiteren Teil des Gesamthohlraums 7 entfernt werden.

Alternativ ist es auch möglich, dass die Anordnung 8 der Formgebungselemente 80 mittels Schwingungs- bzw. Vibrationsenergie zerstört und aus dem Hohlraum 13 und dem weiteren Teil des Gesamthohlraums 7 entfernt wird.

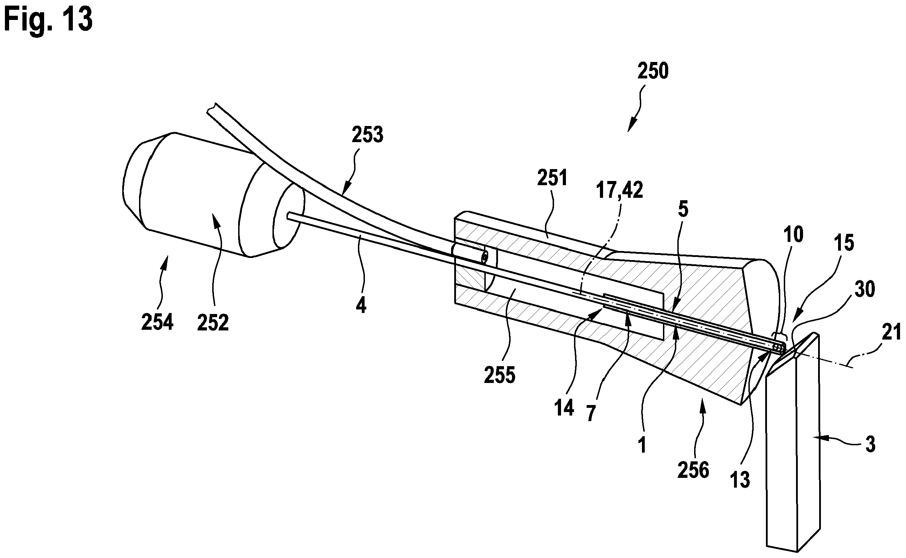

Figur 13 zeigt eine Herstellvorrichtung 250 zum Herstellen einer Düse für die additive Fertigung aus einem Ausgangskörper 1 mit einem hohlen Abschnitt 10 gemäß einem sechsten Ausführungsbeispiel. Im Hohlraum 13 des hohlen Abschnitts 10 bzw. im Gesamthohlraum 7 des Ausgangskörpers 1 ist ein Formgebungskörper 4 angeordnet.

Die Herstellvorrichtung 250 umfasst eine Spannvorrichtung 251 zum Spannen des Ausgangskörpers 1. Die Spannvorrichtung 251 kann im Rahmen der Erfindung auch als Befestigungsvorrichtung bezeichnet werden. Insbesondere ist die Spannvorrichtung 251 eingerichtet, einen mittleren Bereich der Außenkontur 5 zwischen dem ersten Ende 14 und dem zweiten Ende 15 des Ausgangskörpers 1 zu spannen.

Wie sich aus Figur 13 ergibt, weist dazu die Spannvorrichtung 251 einen Spannbereich 256 auf. Ferner ist in der Spannvorrichtung 251 ein Spannvorrichtungshohlraum 255 ausgebildet. Außerdem ist die Spannvorrichtung 252 derart ausgebildet, dass der Ausgangskörper 1 so befestigbar ist, dass die Rotationsachse 21, um die der Ausgangskörper 1 rotiert werden kann, mit der Mittelachse 17 des Ausgangskörpers 1 übereinstimmt.

Weiterhin umfasst die Herstellvorrichtung 250 eine Manipulationsvorrichtung 252 zum Manipulieren des Formgebungskörpers 4 sowie eine Gasführungsvorrichtung 253.

Die Manipulationsvorrichtung 252 ist eingerichtet, den Formgebungskörper 4 parallel und/oder senkrecht zu einer Längsachse 42 des Formgebungskörpers 4, insbesondere oszillierend, zu bewegen. Alternativ oder zusätzlich dazu ist die Manipulationsvorrichtung 252 eingerichtet, den Formgebungskörper 4 um die Längsachse 42, insbesondere oszillierend, zu rotieren. Dabei entspricht vorzugsweise die Längsachse 42 des Formgebungskörpers 4 der Mittelachse 17 des Ausgangskörpers 1 bzw. dessen hohlen Abschnitts 10.

Durch das axiale Bewegen und/oder das Rotieren des Formgebungskörpers 4 entsteht in vorteilhafter Weise Reibung zwischen der Innenkontur 12 des hohlen Abschnitts 10 und dem Formgebungskörper 4, wodurch eine Wärmeeinbringung in den und eine Wärmeverteilung im hohlen Abschnitt 10 des Ausgangskörpers beeinflusst werden können.

Mittels der Gasführungsvorrichtung 253 kann ein Gas, insbesondere ein Schutzgas oder ein aktives Gas, oder eine Gasmischung aus zwei oder mehreren derartigen Gasen, an einem Teil der Gesamtaußenkontur 5 des Ausgangskörpers 1 eine Gasatmosphäre ausbilden. Insbesondere ist die Gasführungsvorrichtung 253 eingerichtet, das Gas oder die Gasmischung in eine Spannvorrichtung 251 um einen Teil der Gesamtaußenkontur 5 des Ausgangkörpers 1 einzubringen.

Neben der beschriebenen Manipulationsfunktion wirkt die Manipulationsvorrichtung 252 auch als eine Kraftaufbringungsvorrichtung 254. Die Manipulationsvorrichtung 252 ist somit eingerichtet, eine Kraft auf den Formgebungskörper 4 auszuüben. Diese Kraft soll einer Presskraft entgegenzuwirken, die während eines Pressens des Werkzeugs 3 gegen die Außenkontur 11 des hohlen Abschnitts 10 des Ausgangskörpers 1 über die Außenkontur 11 auf den Formgebungskörper 4 ausübbar ist. Mit anderen Worten ist die Manipulationsvorrichtung 252 eingerichtet, eine Gegenkraft für den Anpressdruck des Formgebungskörpers 4, der durch die Presskraft des Werkzeugs 3 entsteht, aufzubringen.

Es ist allerdings auch möglich, dass die Kraftaufbringungsvorrichtung 254 sowohl die Manipulationsvorrichtung 252 als auch die Gasführungsvorrichtung 253 umfasst. Das heißt, dass auch die Gasführungsvorrichtung 253 eingerichtet ist, eine Kraft auf den Formgebungskörper 4 auszuüben, um der Presskraft entgegenzuwirken. Dabei wird die auf den Formgebungskörper 4 mittels der Gasführungsvorrichtung 253 auszuübende Kraft durch den Druck des Gases bereitgestellt.

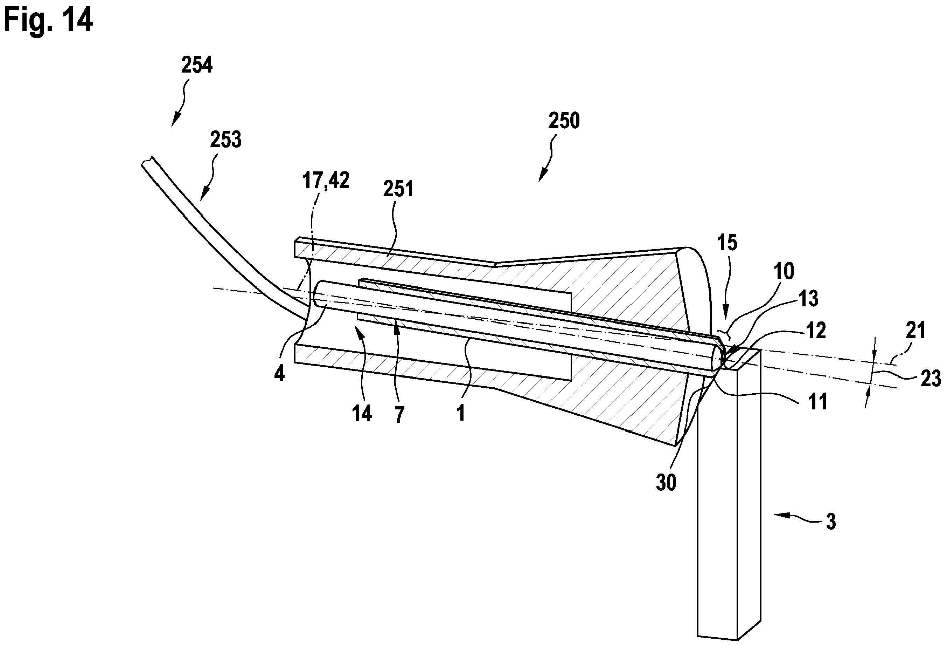

Figur 14 zeigt eine Herstellvorrichtung 250 zum Herstellen einer Düse für die additive Fertigung aus einem Ausgangskörper 1 mit einem hohlen Abschnitt 10 gemäß einem siebten Ausführungsbeispiel. Im Hohlraum 13 des hohlen Abschnitts 10 bzw. im Gesamthohlraum 7 des Ausgangskörpers 1 ist wie beim sechsten Ausführungsbeispiel ein Formgebungskörper 4 angeordnet.

Die Herstellvorrichtung 250 gemäß dem siebten Ausführungsbeispiel unterscheidet sich von derjenigen gemäß dem sechsten Ausführungsbeispiel grundsätzlich dadurch, dass die Herstellvorrichtung 250 gemäß dem siebten Ausführungsbeispiel keine Manipulationsvorrichtung aufweist. Stattdessen wird die Gegenkraft zur Presskraft des Werkzeugs 3 durch den Druck des Gases aufgebracht. Das heißt, dass der Formgebungskörper 4 durch das Gas mit Druck beaufschlagt werden kann.

Mit anderen Worten dient hier die Gasführungsvorrichtung 253 auch als die Kraftaufbringungsvorrichtung 254. Somit übernimmt die Gasführungsvorrichtung 253 zusätzlich zur Funktion der Gasführung zum Bilden einer Gasatmosphäre, in der das Umformen der Außenkontur 11 und der Innenkontur 12 des hohlen Abschnitts 10 durchgeführt wird, auch die Funktion der Kraftaufbringung, wie diese oben beschrieben wurde.

Dafür kann der Formgebungskörper 4 im Vergleich zum Formgebungskörper 4 im sechsten Ausführungsbeispiel entsprechend kürzer ausgebildet werden. Ein weiterer Unterschied zwischen den Herstellvorrichtungen 250 gemäß dem sechsten und dem siebten Ausführungsbeispiel besteht darin, dass die Spannvorrichtung 252 der Herstellvorrichtung gemäß dem siebten Ausführungsbeispiel derart ausgebildet ist, dass der Ausgangskörper 1 so befestigbar ist, dass die Rotationsachse 21, um die der Ausgangskörper 1 rotiert werden kann, einen Winkelversatz 23 zur Mittelachse 17 des Ausgangskörpers 1 aufweist. Entsprechend weist die Längsachse 42 des Formgebungskörpers 4 denselben Winkelversatz 23 zur Rotationsachse 21.

Mit anderen Worten verlaufen der Ausgangskörper 1 und der Formgebungskörper 4 exzentrisch mit Bezug auf die Rotationsachse 21.

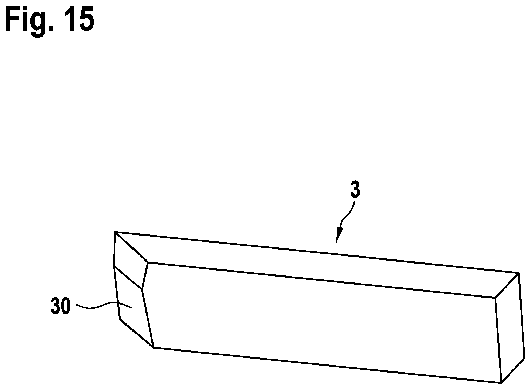

Figur 15 zeigt eine vergrößerte Ansicht des Werkzeugs 3 aus Figuren 13 und 14.

Es handelt sich in dieser speziellen Darstellung um ein Werkzeug 3 mit einem negativen Spanwinkel. Das Werkzeug 3 ist ferner insbesondere aus Edelstahl ausgebildet.

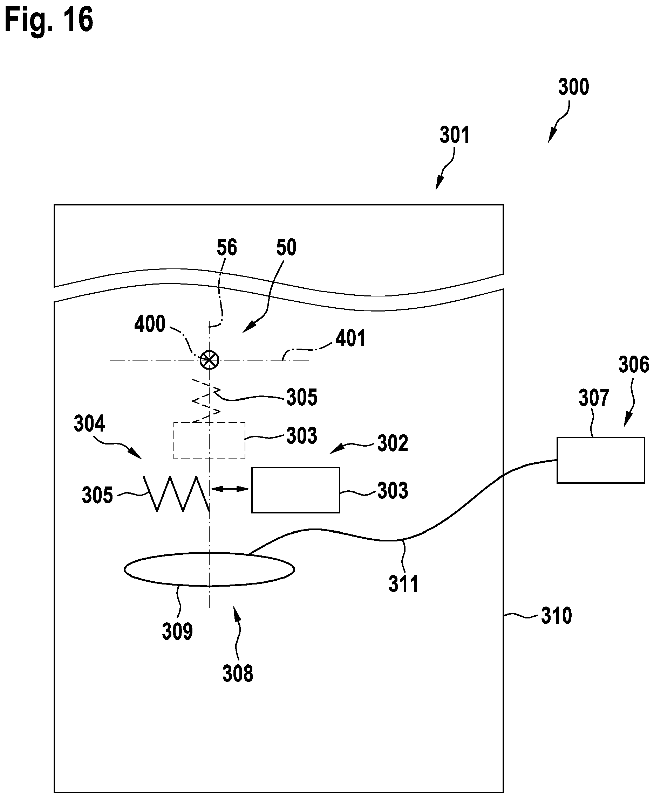

Figur 16 zeigt eine Druckvorrichtung 300 mit einem Drucker 301, bei dem eine durch die zuvor beschriebenen Ausführungsbeispiele hergestellte Düse 50 eingesetzt werden kann.

Zum Bewegen der Düse 50 weist der Drucker 301 eine Bewegungsvorrichtung 302 auf, die eingerichtet ist, die Düse 50 parallel in einer Ebene, die senkrecht zur Mittelachse 56 der Düse 50 steht, zu bewegen.

Dazu ist die Bewegungsvorrichtung 302 mit zwei Bewegungselementen 303, die jeweils eingerichtet sind, die Düse 50 parallel zu einer zur Mittelachse 56 der Düse 50 senkrechten Achse 400, 401 zu bewegen.

Insbesondere können die Bewegungselemente 303 als Elektromagnete ausgebildet sein.

In vorteilhafter Weise sind die beiden Bewegungselemente 303 individuell ansteuerbar.

Ferner weist der Drucker 301 eine Rückstellvorrichtung 304 mit zwei Rückstellelementen 305 auf. Jedes der Rückstellelemente 305 ist eingerichtet, die Düse 50 in einer zur jeweiligen Bewegungsrichtung der Bewegungselemente 303 entgegengesetzter Richtung zu bewegen. Somit kann die Düse 50 in ihre ursprüngliche Position zurückgebracht werden. Insbesondere sind die Rückstellelemente 305 als Druckfeder ausgebildet.

Zum Erwärmen der Düse 50 selbst sowie einer Aufschmelzzone ist ferner bei der Druckvorrichtung 300 eine Laservorrichtung 306 mit mindestens einer Laserquelle 307 vorgesehen.

Um die Laserstrahlen auf die Düse 50 und/oder die Aufschmelzzone besser zu fokussieren, weist die Laservorrichtung 306 ferner eine Optikvorrichtung 308 auf. Insbesondere umfasst die Optikvorrichtung 308 einen Ring 309, der mit der mindestens einen Laserquelle 307 lichtleitend verbunden und konzentrisch um die Düse 50 herum angeordnet ist.

Wie sich aus Figur 16 ergibt, ist die mindestens eine Laserquelle 307 außerhalb einer Baukammer 310 des Druckers 301 angeordnet. Um die Laserstrahlung in die Baukammer 310 zu leiten und somit die Düse 50 und/oder die Aufschmelzzone zu erwärmen, ist die mindestens eine Laserquelle 307 über mindestens eine Glasfaserleitung 311 mit dem Ring 309 verbunden. Die Glasfaserleitung 311 kann insbesondere Teil der Optikvorrichtung 308 sein.

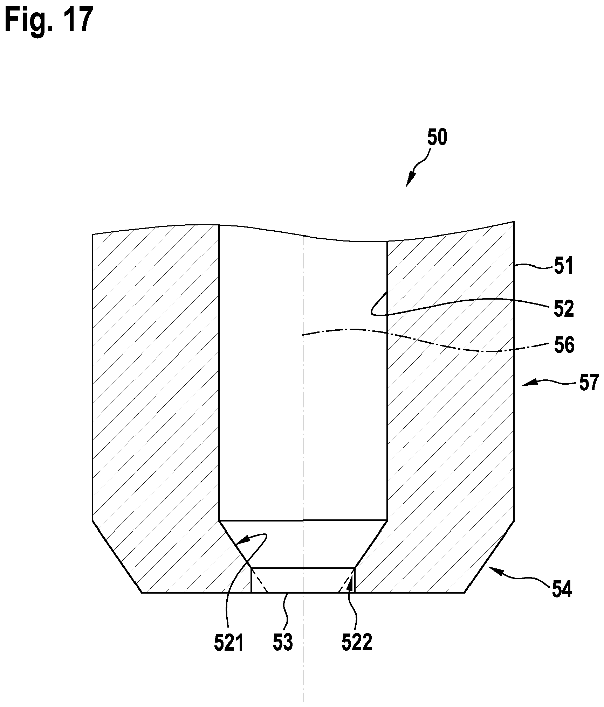

Figur 17 zeigt eine durch das Herstellungsverfahren der vorliegenden Erfindung hergestellte Düse 50 gemäß einem achten Ausführungsbeispiel.

Die Düse 50 gemäß dem achten Ausführungsbeispiel kann insbesondere aus dem Ausgangskörper 1 der Figur 1 hergestellt werden.

Dazu kann das Herstellungsverfahren gemäß Figur 3 durchgeführt werden, wobei in einem weiteren Schritt die nach der Durchführung der Schritte 100 und 101 entstehende Öffnung des Ausgangskörpers 1 durch ein abtragendes Verfahren erweitert wird. Mit anderen Worten kann der Auslass 53 der Düse 50 aus Figur 2 zur Herstellung der Düse 50 gemäß dem achten Ausführungsbeispiel durch das abtragende Verfahren erweitert werden, so dass die Düse 50 gemäß dem achten Ausführungsbeispiel im Vergleich zur Düse der Figur 2 einen größeren Auslass 53 aufweist.

Das abtragende Verfahren wird derart durchgeführt, dass im verjüngten Bereich 54 der Düse 50 die Düseninnenkontur 52 einen ersten Düseninnenkonturbereich 521 und einen zweiten Düseninnenkonturbereich 522 umfasst.

Dabei weisen der erste Düseninnenkonturbereich 521 und der zweite Düseninnenkonturbereich 522 unterschiedliche Konturen auf.

Insbesondere ist der erste Düseninnenkonturbereich 521 verjüngend, insbesondere konisch, ausgebildet, wobei der zweite Düseninnenkonturbereich 522 einen über seine gesamte Länge konstanten, insbesondere kreisförmigen Querschnitt aufweist. Der Auslass 53 weist somit einen Querschnitt auf, der dem konstanten Querschnitt des zweiten Düseninnenkonturbereichs 522 entspricht.

Durch das Vorsehen des ersten Düseninnenkonturbereichs 521 und insbesondere des zweiten Düseninnenkonturbereichs 522 kann die Extrusion eines 3D-Druckmaterials bei einem extrusionsbasierten 3D-Druckverfahren beeinflusst werden.

Der zweite Düseninnenkonturbereich 522 erstreckt sich insbesondere in Richtung der Mittelachse 56, so dass der zweite Düseninnenkonturbereich 522 die Form eines senkrechten Kreiszylinders aufweist. Dadurch trägt der zweite Düseninnenkonturbereich 522 der Führung des 3D-Druckmaterials bei.

Wie sich ferner aus Figur 17 ergibt, ist die Düse 50 am Auslass 53 ringförmig ausgebildet. Mit anderen Worten weist die Düse 50 am Auslass 53 eine ringförmige Fläche auf, die den Auslass 53 umschließt.

Zur besseren Übersicht des Herstellungsverfahrens ist in Figur 17 auch das abzutragende Material mit gestrichelter Linie eingezeichnet.

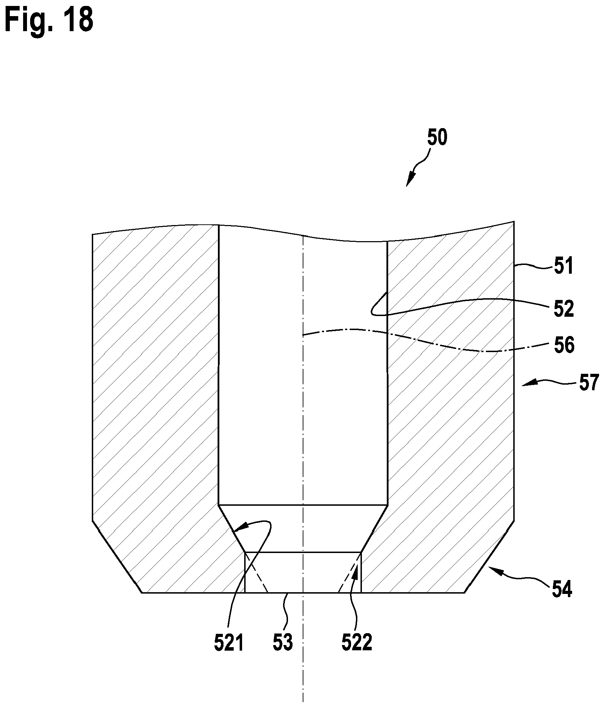

Figur 18 zeigt eine durch das Herstellungsverfahren der vorliegenden Erfindung hergestellte Düse 50 gemäß einem neunten Ausführungsbeispiel.

Dabei ist der Auslass 53 der Düse 50 gemäß dem neunten Ausführungsbeispiel größer als der Auslass 53 der Düse 50 gemäß dem achten Ausführungsbeispiel. Das heißt, dass durch das abtragende Verfahren mehr Material entfernt wird.

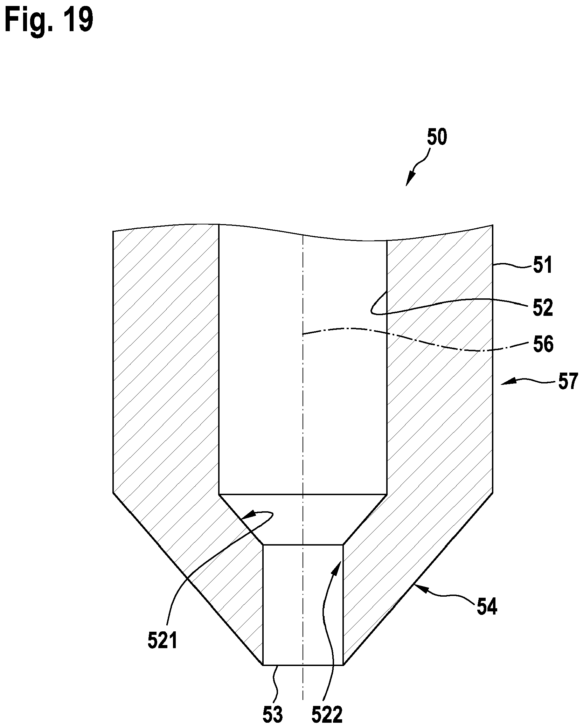

Figur 19 zeigt eine durch das Herstellungsverfahren der vorliegenden Erfindung hergestellte Düse 50 gemäß einem zehnten Ausführungsbeispiel.

Der Unterschied der Düse 50 gemäß dem zehnten Ausführungsbeispiel im Vergleich zu den Düsen 50 gemäß dem achten und dem neunten Ausführungsbeispiel besteht darin, dass die Düse 50 gemäß dem zehnten Ausführungsbeispiel am Auslass 53 keine ringförmige Fläche aufweist.

Mit anderen Worten wird durch das abtragende Verfahren so viel Material entfernt, dass der zweite Düseninnenkonturbereich 522 und die Außenkontur 51 der Düse 50 im verjüngten Bereich 54 in einem Längsschnitt der Düse 50 eine Spitze bilden.

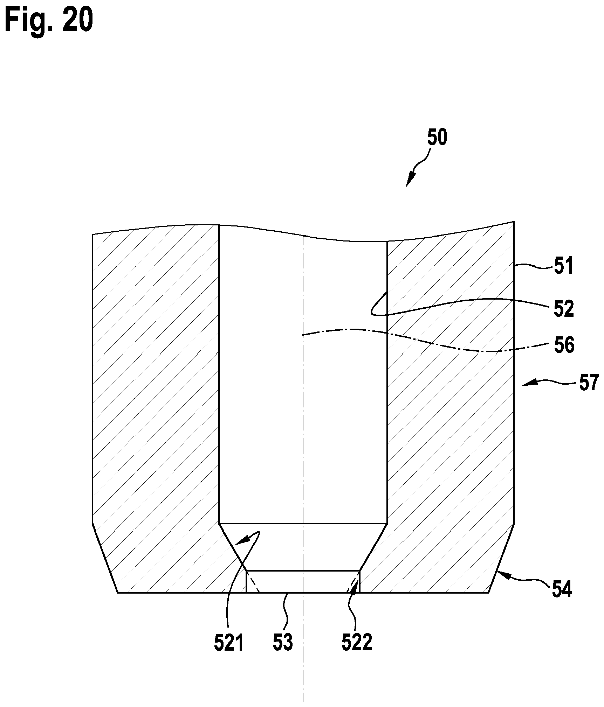

Figur 20 zeigt eine durch das Herstellungsverfahren der vorliegenden Erfindung hergestellte Düse 50 gemäß einem elften Ausführungsbeispiel.

Die Düse 50 gemäß dem elften Ausführungsbeispiel kann insbesondere aus dem Ausgangskörper 1 der Figuren 8 oder 11 hergestellt werden.

Dazu kann insbesondere das Herstellungsverfahren gemäß Figur 10 durchgeführt werden, wobei in einem weiteren Schritt die nach der Durchführung der Schritte 100, 106 und 101 entstehende Öffnung des Ausgangskörpers 1 durch ein abtragendes Verfahren erweitert wird. Mit anderen Worten kann der Auslass 53 der Düse 50 aus Figur 9 zur Herstellung der Düse 50 gemäß dem elften Ausführungsbeispiel durch das abtragende Verfahren erweitert werden, so dass die Düse 50 gemäß dem elften Ausführungsbeispiel im Vergleich zur Düse der Figur 9 einen größeren Auslass 53 aufweist. Wie die Düse 50 der Figur 9, weist die Düsenaußenkontur 51 der Düse 50 gemäß dem elften Ausführungsbeispiel im verjüngten Bereich 54 auch eine konische Form auf.

Analog zum achten Ausführungsbeispiel der Erfindung wird das abtragende Verfahren derart durchgeführt, dass im verjüngten Bereich 54 der Düse 50 ein erster Düseninnenkonturbereich 521 und ein zweiter Düseninnenkonturbereich 522 gebildet werden.

Dabei weisen der erste Düseninnenkonturbereich 521 und der zweite Düseninnenkonturbereich 522 unterschiedliche Konturen auf.

Insbesondere ist der erste Düseninnenkonturbereich 521 verjüngend, insbesondere konisch, ausgebildet, wobei der zweite Düseninnenkonturbereich 522 einen über seine gesamte Länge konstanten, insbesondere kreisförmigen, Querschnitt aufweist. Der Auslass 53 weist somit einen Querschnitt auf, der dem konstanten Querschnitt des zweiten Düseninnenkonturbereichs 522 entspricht.

Der zweite Düseninnenkonturbereich 522 erstreckt sich insbesondere in Richtung der Mittelachse 56, so dass der zweite Düseninnenkonturbereich 522 die Form eines senkrechten Kreiszylinders aufweist.

Neben der vorstehenden schriftlichen Beschreibung der Erfindung wird zu deren ergänzender Offenbarung hiermit explizit auf die zeichnerische Darstellung der Erfindung in den Fig. 1 bis 20 Bezug genommen.

### Bezugszeichenliste

- 1: Ausgangskörper
- 3: Werkzeug
- 4: Formgebungskörper
- 5: Gesamtaußenkontur
- 6: Gesamtinnenkontur
- 7: Gesamthohlraum
- 8: Formgebungselement
- 10: hohler Abschnitt
- 11: Außenkontur
- 12: Innenkontur
- 13: Hohlraum
- 14: erstes Ende
- 15: zweites Ende
- 16: Öffnung
- 17: Mittelachse
- 18: Länge
- 19: Innendurchmesser
- 20: Außendurchmesser
- 21: Rotationsachse
- 22: Versatz
- 23: Winkelversatz
- 30: Pressfläche
- 31: Anstellwinkel
- 40: konischer Bereich
- 41: Winkel
- 42: Längsachse
- 50: Düse
- 51: Düsenaußenkontur
- 52: Düseninnenkontur
- 53: Auslass
- 54: verjüngter Bereich
- 55: Winkel
- 56: Mittelachse
- 57: nicht verjüngter Bereich
- 58: erster Auslassbereich
- 59: zweiter Auslassbereich
- 60: Versatz
- 61: Winkel
- 62: Winkel

- 100: Schritt
- 101: Schritt
- 102: Schritt
- 103: Schritt
- 105: Schritt
- 106: Schritt
- 200: Ebene
- 201: Ebene
- 202: Ebene
- 203: Teil
- 250: Herstellvorrichtung
- 251: Spannvorrichtung
- 252: Manipulationsvorrichtung
- 253: Gasführungsvorrichtung
- 254: Kraftaufbringungsvorrichtung
- 255: Spannvorrichtungshohlraum
- 256: Spannbereich

- 300: Druckvorrichtung
- 301: Drucker
- 302: Bewegungsvorrichtung
- 303: Bewegungselement
- 304: Rückstellungsvorrichtung
- 305: Rückstellelement
- 306: Laservorrichtung
- 307: Laserquelle
- 308: Optikvorrichtung
- 309: Ring
- 310: Baukammer

- 400: Achse
- 401: Achse
- 521: erster Düseninnenkonturbereich
- 522: zweiter Düseninnenkonturbereich

## Patentansprüche

1. Verfahren zum Herstellen einer Düse (50) für die additive Fertigung, umfassend die folgenden Schritte:
• Bereitstellen eines Ausgangskörpers (1) mit einem hohlen Abschnitt (10),
• Bewegen des Ausgangskörpers (1) und eines Werkzeugs (3) relativ zueinander, und
• Pressen des Werkzeugs (3) gegen eine Außenkontur (11) des hohlen Abschnitts (10) des Ausgangskörpers (1) während des Bewegens des Ausgangskörpers (1) und des Werkzeugs (3) relativ zueinander, und zwar derart, dass die Außenkontur (11) des hohlen Abschnitts (10) des Ausgangskörpers (1) zumindest teilweise umformend verjüngt wird.

2. Verfahren nach Anspruch 1, wobei zum Bewegen des Ausgangskörpers (1) und des Werkzeugs (3) relativ zueinander der Ausgangskörper (1) um eine Rotationsachse (21) oder das Werkzeug (3) um den Ausgangskörper (1) rotiert wird
und/oder
wobei das Werkzeug (3) eine Pressfläche (30) aufweist, die in einem Anstellwinkel (31) gegen die Außenkontur (11) des hohlen Abschnitts (10) des Ausgangskörpers (1) gepresst wird, wobei der Anstellwinkel (31) einem Winkel zwischen der Pressfläche (30) und einer Längsachse (17) des hohlen Abschnitts (10) entspricht, wenn die Pressfläche (30) des Werkzeugs (3) eben ausgebildet ist, oder wobei im Falle einer gekrümmten Pressfläche (30) der Anstellwinkel (31) einem Winkel zwischen einer virtuellen ebenen Pressfläche, die durch einen Anfang und ein Ende der gekrümmten Pressfläche (30) gebildet ist, und einer Längsachse (17) des hohlen Abschnitts (10) entspricht.

3. Verfahren nach einem der vorherigen Ansprüche, wobei durch das Pressen des Werkzeugs (3) gegen die Außenkontur (11) des hohlen Abschnitts (10) des Ausgangskörpers (1) zusätzlich zur Außenkontur (11) eine Innenkontur (12) des hohlen Abschnitts (10) des Ausgangskörpers (1) zumindest teilweise umformend verjüngt wird.

4. Verfahren nach Anspruch 3, wobei der hohle Abschnitt (10) des Ausgangskörpers (1) einen Hohlraum (13) aufweist, wobei der Hohlraum (13) des hohlen Abschnitts (10) des Ausgangskörpers (1) während des Pressens des Werkzeugs (3) gegen die Außenkontur (11) des hohlen Abschnitts (10) des Ausgangskörpers (1) freigehalten wird, wodurch die Innenkontur (12) des hohlen Abschnitts (10) des Ausgangskörpers (1) mit der Außenkontur (11) korrelierend umformend verjüngt wird.

5. Verfahren nach Anspruch 3, wobei der hohle Abschnitt (10) des Ausgangskörpers (1) einen Hohlraum (13) aufweist, wobei in dem Hohlraum (13) des hohlen Abschnitts (10) des Ausgangskörpers (1) während des Pressens des Werkzeugs (3) gegen die Außenkontur (11) des hohlen Abschnitts (10) des Ausgangskörpers (1) mindestens ein Formgebungskörper (4) und/oder eine Anordnung (8) von Formgebungselementen (80) in Form von Körnern oder eines Granulats angeordnet wird/werden, wodurch eine vorbestimmte Form des Formgebungskörpers (4) und/oder eine vorbestimmte Form oder eine während des Pressens anzunehmende oder angenommene weitere vorbestimmte Form der Anordnung (8) der Formgebungselemente (80) auf die Innenkontur (12) des hohlen Abschnitts (10) des Ausgangkörpers (1) zumindest teilweise, insbesondere vollständig, übertragen wird.

6. Verfahren nach Anspruch 5, wobei der Formgebungskörper (4) und/oder die Formgebungselemente (80) aus einem derartigen Material ausgebildet ist/sind, dass während des Pressens des Werkzeugs (3) gegen die Außenkontur (11) des hohlen Abschnitts (10) des Ausgangskörpers (1) die vorbestimmte Form des Formgebungskörpers (4) beibehalten wird und/oder die vorbestimmte Form oder die weitere vorbestimmte Form der Anordnung (8) der Formgebungselemente (80)beibehalten wird, und/oder dass durch Zufügen eines Mittels, insbesondere einer Flüssigkeit, und/oder Energie und/oder Kraft der Formgebungskörper (4) aus der vorbestimmten Form und/oder die Anordnung (8) der Formgebungselemente (80) aus der vorbestimmten Form oder der aus weiteren vorbestimmten Form gebracht wird/werden, wobei insbesondere
der Formgebungskörper (4) und/oder die Formgebungselemente (80) aus einem in einem Lösungsmittel, insbesondere in Wasser oder in einer wässrigen Lösung, löslichen Material, insbesondere aus einem Salz, ausgebildet ist/sind.

7. Verfahren nach Anspruch 5, wobei der Formgebungskörper (4) als Ultraschallsonotrode ausgebildet ist.

8. Verfahren nach einem der Ansprüche 5 bis 7, wobei der Formgebungskörper (4), insbesondere vor und/oder während des Pressens und/oder nach dem Pressen des Werkzeugs (3) gegen die Außenkontur (1) des hohlen Abschnitts (10) des Ausgangskörpers (1), um eine Längsachse (42) des Formgebungskörpers (4) rotiert wird und/oder parallel und/oder senkrecht zu einer Längsachse (42) des Formgebungskörpers (4) bewegt wird.

9. Verfahren nach einem der vorherigen Ansprüche, wobei das Pressen des Werkzeugs (3) gegen die Außenkontur (11) des hohlen Abschnitts (10) des Ausgangskörpers (1) in einer Gasatmosphäre durchgeführt wird, wobei die Gasatmosphäre insbesondere vor dem Pressen des Werkzeugs (3) gegen die Außenkontur (11) des hohlen Abschnitts (10) des Ausgangskörpers (1) gebildet wird, wobei insbesondere die Gasatmosphäre durch ein Gas unter Druck gebildet wird, der derart gewählt wird, dass eine Kraft auf den Formgebungskörper (4) und/oder die Anordnung (8) der Formgebungselemente (80) und/oder auf die Innenkontur (12) des hohlen Abschnitts (10) des Ausgangskörpers (1) ausgeübt wird, wobei die Kraft gegen eine durch das Pressen des Werkzeugs (3) gegen die Außenkontur (11) des hohlen Abschnitts (10) des Ausgangskörpers (1) erzeugte Presskraft wirkt.

10. Verfahren nach einem der vorherigen Ansprüche, wobei das Pressen des Werkzeugs (3) gegen die Außenkontur (11) des hohlen Abschnitts (10) des Ausgangskörpers (1) zum Verjüngen der Außenkontur (11) und/oder der Innenkontur (12) des hohlen Abschnitts (10) des Ausgangskörpers (1) in mindestens zwei Pressschritten erfolgt.

11. Verfahren nach Anspruch 10, wobei mindestens ein Pressschritt bei freiem Hohlraum (13) des hohlen Abschnitts (10) des Ausgangskörpers (1) erfolgt, wobei mindestens ein Pressschritt unter Anordnung eines Formgebungskörpers (4) und/oder einer Anordnung (8) von Formgebungselementen (80) im Hohlraum (13) erfolgt
und/oder
wobei vor und/oder nach mindestens einem der Pressschritte und/oder zwischen zwei Pressschritten die Außenkontur (11) des hohlen Abschnitts (10) des Ausgangskörpers (1) zerspant, insbesondere überdreht, wird
und/oder
wobei vor und/oder nach mindestens einem der Pressschritte und/oder zwischen zwei Pressschritten ein Ende (15) des Ausgangskörpers (1) mittels eines abtragenden Verfahrens zum Bilden einer Öffnung (16) bearbeitet, insbesondere gebohrt wird.

12. Verfahren nach einem der vorherigen Ansprüche, wobei ein verjüngter Bereich (54) des hohlen Abschnitts (10) des Ausgangskörpers (1) mit Bezug auf eine Längsachse (17) des Ausgangskörpers (1) abgeschrägt, insbesondere abgefräst wird.

13. Verfahren nach einem der Ansprüche 2 bis 12, wobei bei rotierendem Ausgangskörper (1) die Rotationsachse (21) des Ausgangskörpers (1) mit einer Mittelachse (17) des Ausgangskörpers (1) übereinstimmt
oder
wobei die Rotationsachse (21) des Ausgangskörpers (1) mit Bezug auf die Mittelachse (17) des Ausgangskörpers (1) parallel versetzt angeordnet ist und/oder zu dieser einen Winkelversatz (23) aufweist.

14. Düse (50), die durch das Verfahren nach einem der vorherigen Ansprüche hergestellt wird.

15. Herstellvorrichtung (250) zum Herstellen einer Düse (50) für die additive Fertigung aus einem Ausgangskörper (1) mit einem hohlen Abschnitt (10) mittels eines Verfahrens gemäß einem der Ansprüche 1 bis 13, umfassend:
• eine Spannvorrichtung (251) zum Spannen des Ausgangskörpers (1) und/oder eines Werkzeugs (3).

16. Herstellvorrichtung (250) nach Anspruch 15, umfassend eine Manipulationsvorrichtung (252) zum Manipulieren eines Formgebungskörpers (4), welcher zumindest im hohlen Abschnitt (10) des Ausgangskörpers (1) anordbar ist, wobei die Manipulationsvorrichtung (252) eingerichtet ist, den Formgebungskörper (4) parallel und/oder senkrecht zu einer Längsachse (42) des Formgebungskörpers (4) zu bewegen und/oder den Formgebungskörper (4) um seine Längsachse (42) zu rotieren und/oder
umfassend eine Gasführungsvorrichtung (253), die eingerichtet ist, ein Gas in zumindest einen Teil eines Gesamthohlraums (7) des Ausgangskörpers (1) und/oder auf zumindest einen Teil einer Gesamtaußenkontur (5) des Ausgangkörpers (1) und/oder an zumindest einen Teil einer Gesamtaußenkontur (5) des Ausgangkörpers (1) zum Bilden einer Gasatmosphäre zu führen
und/oder
umfassend eine Kraftaufbringungsvorrichtung (254), die eingerichtet ist, eine Kraft auf einen zumindest in einem Hohlraum (13) des hohlen Abschnitts (10) des Ausgangskörpers (1) anordbaren Formgebungskörper (4) und/oder auf eine zumindest in einem Hohlraum (13) des hohlen Abschnitts (10) des Ausgangskörpers (1) anordbare Anordnung (8) von Formgebungselementen (80) auszuüben, um einer Presskraft entgegenzuwirken, die während eines Pressens eines Werkzeugs (3) gegen eine Außenkontur (11) des hohlen Abschnitts (10) des Ausgangskörpers (1) über die Außenkontur (11) auf den Formgebungskörper (4) und/oder die Anordnung (8) der Formgebungselemente (80) ausübbar ist.

## Geänderte Patentansprüche

### Geänderte Patentansprüche gemäss Regel 137(2) EPÜ.

1. Verfahren zum Herstellen einer Düse (50) für die additive Fertigung, umfassend die folgenden Schritte:
• Bereitstellen eines Ausgangskörpers (1) mit einem hohlen Abschnitt (10),
• Bewegen des Ausgangskörpers (1) und eines Werkzeugs (3) relativ zueinander, und
• Pressen des Werkzeugs (3) gegen eine Außenkontur (11) des hohlen Abschnitts (10) des Ausgangskörpers (1) während des Bewegens des Ausgangskörpers (1) und des Werkzeugs (3) relativ zueinander, und zwar derart, dass die Außenkontur (11) des hohlen Abschnitts (10) des Ausgangskörpers (1) zumindest teilweise umformend verjüngt wird,
**dadurch gekennzeichnet, dass** der umzuformende, hohle Abschnitt (10) des Ausgangskörpers (1) auf eine Plastifizierungstemperatur des Materials des hohlen Abschnitts (10) des Ausgangskörpers (1) erwärmt wird.

2. Verfahren nach Anspruch 1, wobei zum Bewegen des Ausgangskörpers (1) und des Werkzeugs (3) relativ zueinander der Ausgangskörper (1) um eine Rotationsachse (21) oder das Werkzeug (3) um den Ausgangskörper (1) rotiert wird und/oder
wobei das Werkzeug (3) eine Pressfläche (30) aufweist, die in einem Anstellwinkel (31) gegen die Außenkontur (11) des hohlen Abschnitts (10) des Ausgangskörpers (1) gepresst wird, wobei der Anstellwinkel (31) einem Winkel zwischen der Pressfläche (30) und einer Längsachse (17) des hohlen Abschnitts (10) entspricht, wenn die Pressfläche (30) des Werkzeugs (3) eben ausgebildet ist, oder wobei im Falle einer gekrümmten Pressfläche (30) der Anstellwinkel (31) einem Winkel zwischen einer virtuellen ebenen Pressfläche, die durch einen Anfang und ein Ende der gekrümmten Pressfläche (30) gebildet ist, und einer Längsachse (17) des hohlen Abschnitts (10) entspricht.

3. Verfahren nach einem der vorherigen Ansprüche, wobei durch das Pressen des Werkzeugs (3) gegen die Außenkontur (11) des hohlen Abschnitts (10) des Ausgangskörpers (1) zusätzlich zur Außenkontur (11) eine Innenkontur (12) des hohlen Abschnitts (10) des Ausgangskörpers (1) zumindest teilweise umformend verjüngt wird.

4. Verfahren nach Anspruch 3, wobei der hohle Abschnitt (10) des Ausgangskörpers (1) einen Hohlraum (13) aufweist, wobei der Hohlraum (13) des hohlen Abschnitts (10) des Ausgangskörpers (1) während des Pressens des Werkzeugs (3) gegen die Außenkontur (11) des hohlen Abschnitts (10) des Ausgangskörpers (1) freigehalten wird, wodurch die Innenkontur (12) des hohlen Abschnitts (10) des Ausgangskörpers (1) mit der Außenkontur (11) korrelierend umformend verjüngt wird.

5. Verfahren nach Anspruch 3, wobei der hohle Abschnitt (10) des Ausgangskörpers (1) einen Hohlraum (13) aufweist, wobei in dem Hohlraum (13) des hohlen Abschnitts (10) des Ausgangskörpers (1) während des Pressens des Werkzeugs (3) gegen die Außenkontur (11) des hohlen Abschnitts (10) des Ausgangskörpers (1) mindestens ein Formgebungskörper (4) und/oder eine Anordnung (8) von Formgebungselementen (80) in Form von Körnern oder eines Granulats angeordnet wird/werden, wodurch eine vorbestimmte Form des Formgebungskörpers (4) und/oder eine vorbestimmte Form oder eine während des Pressens anzunehmende oder angenommene weitere vorbestimmte Form der Anordnung (8) der Formgebungselemente (80) auf die Innenkontur (12) des hohlen Abschnitts (10) des Ausgangkörpers (1) zumindest teilweise, insbesondere vollständig, übertragen wird.

6. Verfahren nach Anspruch 5, wobei der Formgebungskörper (4) und/oder die Formgebungselemente (80) aus einem derartigen Material ausgebildet ist/sind, dass während des Pressens des Werkzeugs (3) gegen die Außenkontur (11) des hohlen Abschnitts (10) des Ausgangskörpers (1) die vorbestimmte Form des Formgebungskörpers (4) beibehalten wird und/oder die vorbestimmte Form oder die weitere vorbestimmte Form der Anordnung (8) der Formgebungselemente (80)beibehalten wird, und/oder dass durch Zufügen eines Mittels, insbesondere einer Flüssigkeit, und/oder Energie und/oder Kraft der Formgebungskörper (4) aus der vorbestimmten Form und/oder die Anordnung (8) der Formgebungselemente (80) aus der vorbestimmten Form oder der aus weiteren vorbestimmten Form gebracht wird/werden, wobei insbesondere
der Formgebungskörper (4) und/oder die Formgebungselemente (80) aus einem in einem Lösungsmittel, insbesondere in Wasser oder in einer wässrigen Lösung, löslichen Material, insbesondere aus einem Salz, ausgebildet ist/sind.

7. Verfahren nach Anspruch 5, wobei der Formgebungskörper (4) als Ultraschallsonotrode ausgebildet ist.

8. Verfahren nach einem der Ansprüche 5 bis 7, wobei der Formgebungskörper (4), insbesondere vor und/oder während des Pressens und/oder nach dem Pressen des Werkzeugs (3) gegen die Außenkontur (1) des hohlen Abschnitts (10) des Ausgangskörpers (1), um eine Längsachse (42) des Formgebungskörpers (4) rotiert wird und/oder parallel und/oder senkrecht zu einer Längsachse (42) des Formgebungskörpers (4) bewegt wird.

9. Verfahren nach einem der vorherigen Ansprüche, wobei das Pressen des Werkzeugs (3) gegen die Außenkontur (11) des hohlen Abschnitts (10) des Ausgangskörpers (1) in einer Gasatmosphäre durchgeführt wird, wobei die Gasatmosphäre insbesondere vor dem Pressen des Werkzeugs (3) gegen die Außenkontur (11) des hohlen Abschnitts (10) des Ausgangskörpers (1) gebildet wird, wobei insbesondere die Gasatmosphäre durch ein Gas unter Druck gebildet wird, der derart gewählt wird, dass eine Kraft auf den Formgebungskörper (4) und/oder die Anordnung (8) der Formgebungselemente (80) und/oder auf die Innenkontur (12) des hohlen Abschnitts (10) des Ausgangskörpers (1) ausgeübt wird, wobei die Kraft gegen eine durch das Pressen des Werkzeugs (3) gegen die Außenkontur (11) des hohlen Abschnitts (10) des Ausgangskörpers (1) erzeugte Presskraft wirkt.

10. Verfahren nach einem der vorherigen Ansprüche, wobei das Pressen des Werkzeugs (3) gegen die Außenkontur (11) des hohlen Abschnitts (10) des Ausgangskörpers (1) zum Verjüngen der Außenkontur (11) und/oder der Innenkontur (12) des hohlen Abschnitts (10) des Ausgangskörpers (1) in mindestens zwei Pressschritten erfolgt.

11. Verfahren nach Anspruch 10, wobei mindestens ein Pressschritt bei freiem Hohlraum (13) des hohlen Abschnitts (10) des Ausgangskörpers (1) erfolgt, wobei mindestens ein Pressschritt unter Anordnung eines Formgebungskörpers (4) und/oder einer Anordnung (8) von Formgebungselementen (80) im Hohlraum (13) erfolgt und/oder
wobei vor und/oder nach mindestens einem der Pressschritte und/oder zwischen zwei Pressschritten die Außenkontur (11) des hohlen Abschnitts (10) des Ausgangskörpers (1) zerspant, insbesondere überdreht, wird
und/oder
wobei vor und/oder nach mindestens einem der Pressschritte und/oder zwischen zwei Pressschritten ein Ende (15) des Ausgangskörpers (1) mittels eines abtragenden Verfahrens zum Bilden einer Öffnung (16) bearbeitet, insbesondere gebohrt wird.

12. Verfahren nach einem der vorherigen Ansprüche, wobei ein verjüngter Bereich (54) des hohlen Abschnitts (10) des Ausgangskörpers (1) mit Bezug auf eine Längsachse (17) des Ausgangskörpers (1) abgeschrägt, insbesondere abgefräst wird.

13. Verfahren nach einem der Ansprüche 2 bis 12, wobei bei rotierendem Ausgangskörper (1) die Rotationsachse (21) des Ausgangskörpers (1) mit einer Mittelachse (17) des Ausgangskörpers (1) übereinstimmt
oder
wobei die Rotationsachse (21) des Ausgangskörpers (1) mit Bezug auf die Mittelachse (17) des Ausgangskörpers (1) parallel versetzt angeordnet ist und/oder zu dieser einen Winkelversatz (23) aufweist.

14. Düse (50), die durch das Verfahren nach einem der vorherigen Ansprüche hergestellt wird, wobei die Düse (50) einen verjüngten Bereich (54) aufweist.

15. Herstellvorrichtung (250) zum Herstellen einer Düse (50) für die additive Fertigung aus einem Ausgangskörper (1) mit einem hohlen Abschnitt (10) mittels eines Verfahrens gemäß einem der Ansprüche 1 bis 13, umfassend:
• eine Spannvorrichtung (251) zum Spannen des Ausgangskörpers (1) und/oder eines Werkzeugs (3).

16. Herstellvorrichtung (250) nach Anspruch 15, umfassend eine Manipulationsvorrichtung (252) zum Manipulieren eines Formgebungskörpers (4), welcher zumindest im hohlen Abschnitt (10) des Ausgangskörpers (1) anordbar ist, wobei die Manipulationsvorrichtung (252) eingerichtet ist, den Formgebungskörper (4) parallel und/oder senkrecht zu einer Längsachse (42) des Formgebungskörpers (4) zu bewegen und/oder den Formgebungskörper (4) um seine Längsachse (42) zu rotieren und/oder
umfassend eine Gasführungsvorrichtung (253), die eingerichtet ist, ein Gas in zumindest einen Teil eines Gesamthohlraums (7) des Ausgangskörpers (1) und/oder auf zumindest einen Teil einer Gesamtaußenkontur (5) des Ausgangkörpers (1) und/oder an zumindest einen Teil einer Gesamtaußenkontur (5) des Ausgangkörpers (1) zum Bilden einer Gasatmosphäre zu führen
und/oder
umfassend eine Kraftaufbringungsvorrichtung (254), die eingerichtet ist, eine Kraft auf einen zumindest in einem Hohlraum (13) des hohlen Abschnitts (10) des Ausgangskörpers (1) anordbaren Formgebungskörper (4) und/oder auf eine zumindest in einem Hohlraum (13) des hohlen Abschnitts (10) des Ausgangskörpers (1) anordbare Anordnung (8) von Formgebungselementen (80) auszuüben, um einer Presskraft entgegenzuwirken, die während eines Pressens eines Werkzeugs (3) gegen eine Außenkontur (11) des hohlen Abschnitts (10) des Ausgangskörpers (1) über die Außenkontur (11) auf den Formgebungskörper (4) und/oder die Anordnung (8) der Formgebungselemente (80) ausübbar ist.
